# EUROPÄISCHE PATENTSCHRIFT

(11) **EP 1 701 178 B1**
(45) Veröffentlichungstag und Bekanntmachung des Hinweises auf die Patenterteilung: **04.11.2009**
(21) Anmeldenummer: 03817670.7
(22) Anmeldetag: 25.07.2003
(51) Int. Cl.: G01S 13/93, G01S 17/93, G01C 23/00, G06F 17/00

(54) **VERFAHREN UND SYSTEM ZUR VERHINDERUNG, DASS EIN FLUGZEUG IN EINEN GEFÄHRLICHEN NACHZUGSWIRBELBEREICH EINES WIRBELERZEUGERS EINDRINGT**
METHOD AND SYSTEM FOR PREVENTING AN AIRCRAFT FROM PENETRATING INTO A DANGEROUS TRAILING VORTEX AREA OF A VORTEX GENERATOR
PROCEDE ET SYSTEME D'AVERTISSEMENT CONCERNANT L'ENTREE POSSIBLE D'UN AERONEF DANS UNE ZONE DANGEREUSE DE SILLAGE TOURBILLONNAIRE DE GENERATEUR DE TOURBILLONS

(43) Veröffentlichungstag der Anmeldung: 13.09.2006
(73) Patentinhaber: Baranov, Nikolai Alekseevich, Moscow, 109153 (RU); Belotserkovski, Andrei Sergeevich, Moscow, 124683 (RU); Kanevski, Mikhail Igorevich, Moscow, 127152 (RU); Pasekunov, Igor Vladimirovich, Moscow 123481 (RU); ZAKRYTOE AKTSIONERNOE OBSCHESTVO ROSSIYSKAYA AKTSIONERNAYA ASSOTSIATSIYA "SPETSTEKHNIKA", Moskovskaya obl., 141980 (RU)
(72) Erfinder: Baranov, Nikolai Alekseevich, Moscow, 109153 (RU); Belotserkovski, Andrei Sergeevich, Moscow, 124683 (RU); Kanevski, Mikhail Igorevich, Moscow, 127152 (RU); Pasekunov, Igor Vladimirovich, Moscow 123481 (RU); ZAKRYTOE AKTSIONERNOE OBSCHESTVO ROSSIYSKAYA AKTSIONERNAYA ASSOTSIATSIYA "SPETSTEKHNIKA", Moskovskaya obl., 141980 (RU)
(74) Vertreter: Jeck, Anton
(86) Internationale Anmeldenummer: PCT/RU2003/000332
(87) Internationale Veröffentlichungsnummer: WO 2005/010554

(56) Entgegenhaltungen:
- WO-A-00/71985
- DE-A1- 10 039 109
- RU-C1- 2 088 487
- US-A- 4 137 764
- US-A- 5 724 040
- US-A- 6 133 867
- US-B1- 6 177 888

## Beschreibung

Die Erfindung gehört zu Verfahren und Einrichtungen der Flugsicherheit, insbesondere zu Verfahren zur Vorbeugung außerordentlicher Situationen, die mit einem möglichen Einflug von Flugzeugen in eine Wirbelschleppengefährdungszone eines Wirbelerzeugers, u. a. beim Luftabfluss von einem Objekt, verbunden sind.

Das Problem der Flugsicherheit ist sehr aktuell und umfasst eine ganze Reihe sowohl wissenschaftlich-technischer als auch methodischer Organisationsaufgaben. Eine dieser Aufgaben ist die Gewährleistung der Flugsicherheit in derjenigen Situation, in der der flugsicherheitsbestimmende Faktor die Wirkung der aerodynamischen Luftströmung hoher Turbulenz auf ein Flugzeug ist, wobei die Luftströmung sowohl bei der Bewegung des stromerzeugenden Objekts in der Umgebung eines Flugzeugs als auch bei Gegenwart der mit Strömungen hoher Turbulenz und Wirbelung umfließenden Objekte in der Umgebung eines Flugzeugs erzeugt werden.

Es ist bekannt, dass bei der Bewegung eines Flugzeugs in der Luft eine so genannte Wirbelschleppe erzeugt wird, die von der das Flugzeug umfließenden Luftströmung gebildet wird.

Der Einflug des Flugzeugs in die Wirbelschleppe eines anderen Objekts, beispielsweise eines anderen Flugzeugs, führt zu einer wesentlichen Änderung des Angriffswinkels (Anströmwinkels) und des Gleitwinkels. Das Flugzeug ist dabei der Wirkung aerodynamischer Kräfte und Momente ausgesetzt, die es beispielsweise seitlich von der Schleppe verschieben und in kleineren Höhen, beispielsweise beim Starten oder Landen, wegen der unmöglichen Kompensation dieser Wirkung mittels Bedienungsorganen des Flugzeugs zu außerordentlichen Situationen führen können.

Die Entwicklung von Flugzeugen kleiner Spannweite mit großer, spezifischer Beanspruchung führt zu einer Erhöhung der Wirbelschleppenstärke, wodurch die Einfluggefahr des Flugzeugs in diese Schleppe erhöht wird.

Mehrere Untersuchungen der Wirbelausbreitung und -alterung zeigten, dass atmosphärische Faktoren, wie Wind, Windverschiebung, Luftschichtung und Turbulenz, große Bedeutung für diese Prozesse haben.

Es ist möglich, den Sicherheitsabstand zwischen den Flugzeugen bei der Landung, dem Starten und dem Flug aufgrund einer zuverlässigen Prognose des Wirbelschleppenverhaltens unter Einsatz laufender und kurzzeitiger Prognosen für die meteorologische Bedingungen sowie aufgrund der Wirkung atmosphärischer Bedingungen und der Erdnähe auf das Wirbelschleppenverhalten zu optimieren.

Eine der Problemlösungen der Flugsicherheit in derjenigen Situation, in der der bestimmende Faktor die aerodynamische Wirbelschleppe ist, ist die Wahl der Flugzustände, die das vorgegebene Sicherheitsniveau gewährleisten.

Zur Lösung dieser Aufgabe kann die Entwicklung von Bordrechensystemen beitragen, die in Echtzeit arbeiten, das Gefährdungspotential der auf das Flugzeug wirkenden aerodynamischen Strömung bestimmen und die Wahl des Verfahrens zur weiteren Korrektur der Flugzeuglenkung zwecks wirksamerer Kompensierung dieser Strömungen erlauben.

Eine weitere Aufgabe, die zu den Informationsaufgaben gezählt werden kann, ist die Bereitstellung von Information über die Lage der Wirbelschleppe und des Flugzeugs im prognostizierenden Zeitpunkt.

Durch die US 5 845 874 A sind ein Verfahren und eine Vorrichtung zur optischen Abbildung von Wirbelschleppen mittels mathematischer Wirbelschleppenmodelle aufgrund von Flugparametern des wirbelerzeugenden Flugzeugs unter Berücksichtigung der Wirkung atmosphärischer Bedingungen auf das Wirbelschleppenverhalten bekannt. Gemäß der technischen Lösung ist dabei ein schnellwirkendes Display eingesetzt, in dem eine Visualisierung simulierter Wirbelschleppen einzelner Flugzeuge durchgeführt wird, die sich in der Nähe des genannten Flugzeugs befinden. Bei mehreren anderen Flugzeugen in dem das genannte Flugzeug umgebenden Luftraum, beispielsweise in der Nähe des Flughafens, bildet das Display eine große Anzahl der simulierten Wirbelschleppen ab, wodurch es zu Schwierigkeiten bei der Bestimmung der Wirbelschleppen, die eine tatsächliche Gefahr für das Flugzeug darstellen, und bei der Bestimmung der Gefahr, die vernachlässigt werden kann, kommen kann.

Einer der vielversprechenden Wege zur Erhöhung der Flugsicherheit ist die Datenverfügbarkeit über eine prognostizierende Lage der Wirbelschleppe in Echtzeit beim Einflug, bei der ein Unfall erfolgen kann.

Durch die US 6 177 888 A ist ein System zur Warnung vor einer Wirbelschleppenturbulenz bekannt, das am Bord eines Flugzeugs angeordnet wird und eine Information über den möglichen Einflug in die Wirbelschleppe eines anderen Flugzeugs dem Piloten erst dann meldet, wenn das System sicherstellt, dass der Einflug des nachfliegenden Flugzeugs in die Wirbelschleppe eines anderen Flugzeuges in einer gewissen, vorgegebenen Zeitperiode erfolgt. Das System sieht dabei eine Zusammenwirkung der Flugzeuge, einen Austausch der Warnsignale und Daten über die Flughöhe, den Abstand und die Peilung und eine Überwachung der Wirbelschleppenbahn unter Berücksichtigung der örtlichen Windgeschwindigkeit vor und kann den Abstand oder die Zeit bis zum Einflug des Flugzeugs in die Wirbelschleppe eines anderen Flugzeugs bestimmen. Das System sichert die Anzeige der Nähe zur Wirbelschleppe, wenn der Abstand und die Zeit eine vorgegebene Schwelle unterschreiten. Die Breite und Höhe der Wirbelschleppe werden dabei in jedem Punkt der Punktemenge längs der Wirbelschleppenbahn als Abstandsfunktion des angegebenen Punkts zum Flugzeug errechnet.

Dieses System liefert aber keine Informationen über das Gefährdungspotential des Einflugs in die erkannte Wirbelschleppe und über das angemessene Manöver des Flugzeugs, um den Einflug in die Wirbelschleppe auszuschließen.

Darüber hinaus fordert die Mehrzahl der Flugbedingungen eine Verringerung des Abstandes zwischen den Flugzeugen, beispielsweise bei nacheinander folgendem Starten und Landen im Flughafen, was für die Erhöhung der Flughafenkapazität von Bedeutung ist.

Zuverlässige Informationen über die Lage und Struktur der Wirbelschleppe und über die Besonderheiten der Wirkung der Wirbelschleppe auf ein Flugzeug in der prognostizierenden Zeit fordern die Erfüllung von widersprüchlichen Forderungen an die höhere Wirksamkeit der Flugaufgabendurchführung und an die Erhöhung der Flugsicherheit.

Durch die US 6 211 808 B1 ist ein Wirbelschleppenkollisionssystem, mit dem jedes Flugzeug ausgestattet ist, zur Warnung des Piloten vor der prognostizierenden, gefährlichen Gegenwart eines Flugzeugs bekannt, das vor einem anderen in der Umgebung befindlichen Flugzeug fliegt. Das System umfasst eine sphärische Antenne aus dielektrischem Material und acht Sektoren mit Empfängern zum Empfang von Mikrowellensignalen, die von in der Umgebung befindlichen, anderen Flugzeugen reflektiert werden. Das System ist aber teuer und liefert dem Piloten keine Informationen über die gefährlichen Strömungen.

Durch die WO 00/71985 ist eine technische Lösung bekannt, die Verfahren zum Vermeiden der Überschneidung des Flugzeugwegs mit der Wirbelschleppe eines anderen Flugzeugs betrifft. Diese Lösung umfasst eine Bestimmung der Position, der Konfiguration und der Art der Wirbel, die vom anderen Flugzeug verursacht werden, dessen Gegenwart mit Hilfe von Informationen aus Bordsystemen des ersten Flugzeugs, Informationen vom anderen Flugzeug oder Informationen vom Flughafen bestimmt wird, ferner eine Bestimmung der Flugzeughöhe, der prognostizierenden Position der vom Flugzeug erzeugten Wirbelschleppe unter Verwendung atmosphärischer Bedingungen, insbesondere der Windgeschwindigkeit und -richtung sowie der Lufttemperatur, eine Auswertung der empfangenen Daten in Bezug auf Referenztabellen oder eine Simulation der Wirbelschleppe mit der Visualisierung der Wirbelschleppenposition und -bahn bezüglich des ersten Flugzeugs und eine Prognose des Überschneidungspunkts der Wirbelschleppenbahn mit der Bewegung des ersten Flugzeugs mit einer Warnsignalerzeugung im Fall einer solchen Überschneidung. Im Wesentlichen wird das Verfahren zur Flugsicherheit zweier Flugzeuge im Terminal-Bereich eingesetzt, und seine Realisierung kann zu einer Verlegung der Flugbahn des ersten Flugzeugs in eine größere Höhe zum zweiten Flugzeug führen. Dabei wird das Traffic Collision Avoidance System (Verkehrskollisionsvermeidungssystem) eingesetzt. Für den Piloten des ersten Flugzeugs werden aber Informationen über alle Wirbelbereiche angezeigt, die in der Umgebung des ersten Flugzeugs in Bezug auf das zweite Flugzeug vorhergesagt werden, wodurch kein tatsächliches Gefahrenbild dieser Wirbel für den Flug des zweiten Flugzeugs geliefert wird.

Durch die 37th Aerospace Sciences Meeting & Exihibit, January 11-14, 1999, Reno, NV, NASA Langly Research Centre, Hampton, VA, ist bekannt, dass die NASA eine große Aufmerksamkeit der Wirksamkeitssteigerung des Terminal-Bereichs, insbesondere beim Starten und Landen der Flugzeuge, schenkt, und eine der Entwicklungen ist die Erarbeitung eines Systems der Wirbelschleppenstaffelung (AVOSS), das die Ausgangssignale mehrer Systeme vereinigt und von der Wetterlage abhängende, dynamische Intervallkriterien der Wirbelschleppen festsetzt. Diese Systeme liefern laufende und prognostizierende Wetterlagen, Modelle der Wirbelschleppenausbreitung und -alterung bei diesen Witterungsverhältnissen von der Erdoberfläche bis zur Höhe des Landungs- oder Startgleitweges und sichern eine Rückmeldung des Verhaltens der Wirbelschleppen in Echtzeit. Das Verhalten der Wirbelschleppe wird mit vorbestimmten Größen des Sicherheitskorridors und der Bestimmung der Wirbelschleppenalterung verglichen, und somit wird die gesuchte Staffelung der Flugzeuge bestimmt. Wenn die Wirbelschleppen länger als erwartet fortdauern, wird eine Verkürzung des Sicherheitsabstands zwischen dem Start oder der Landung verboten. Dabei wird das Verhalten der Wirbelschleppe durch eine Mehrzahl von "Fenstern" des Landeanflugs von der Gleitweghöhe bis zur Stirnseite der Start- und Landebahn berechnet.

Dieses bekannte System ist aber dadurch beschränkt, dass eine vertikale Windverschiebung nicht erfasst wird, die ein Absinken der Wirbelschleppe verhindern oder zu einem Ansteigen der Wirbelschleppe führen kann; ferner wird das konkrete Turbulenzausmaß nicht erfasst, das zur Simulation der Schleppenalterung erforderlich ist; weiterhin bestehen weitere Beschränkungen, die zu einer außerordentlichen Situation infolge der Nichtkonformität der vorberechneten Schleppenparameter mit den tatsächlichen Parametern der Wirbelschleppe führen können.

Darüber hinaus führt der Einsatz des genannten VOSS-Systems zur einer Erhöhung der Belastung der Fluglotsen, die ohnehin hohen emotionellen Stressanstrengungen im Hintergrund einer wesentlichen Intensivierung ihrer Arbeit ausgesetzt werden, was nicht wünschenswert ist, weil dies die Möglichkeit nicht angemessener Entscheidungen erhöht.

Berücksichtigt werden muss auch, dass die ausländischen Sicherheitssysteme meistens auf den Einsatz der so genannten Instrumentenflugregeln ausgerichtet sind, bei denen die Lenkung des Flugzeugs aufgrund von Lotsenanweisungen in der direkten oder automatischen Arbeitsweise durchgeführt wird.

Es ist aber bekannt, dass bei der Fluglotsentätigkeit das Treffen von Entscheidungen in den außerordentlichen Situationen sehr schwierig ist. Das Treffen von Entscheidungen besteht aus zwei Schritten, nämlich das Erkennen der Situation und das Festlegen der Vorgehensweise zur Beseitigung der Situation. Bevor der Lotse den nächsten Tätigkeitsschritt ausführt, muss er seine weiteren Schritte vorhersehen. Die Aufnahme visueller und akustischer Signale von Dauerspeichern, visuellen Mitteln oder vom Gehör benötigt eine gewisse Zeit in einer Situation des Zeitmangels. Die Aufnahmezeit grafischer Symbole ist wesentlich kürzer, und das Erkennen der Situation mittels einer Anzeige markierter Abbildungszonen erlaubt, eine Entscheidung angemessen zu treffen.

Ferner führt die Wirkung der Beschleunigung zu einer Störung des Gehirnblutflusses beim Piloten und kann bei emotioneller Überanstrengung zu kurzzeitiger Bewusstseinslosigkeit führen. Deswegen wird bevorzugt, dem Piloten oder Fluglotsen die benötigten Informationen vor dem Entscheidungstreffen und in grafischen Symbolen zur Verfügung zu stellen.

Das Ziel der Erfindung ist die Entwicklung eines Systems zur Warnung vor einem möglichen Einflug eines Flugzeugs in eine Wirbelschleppengefährdungszone, die von anderen Flugzeugen, oberirdischen Objekten, beweglichen und nicht beweglichen Seeobjekten erzeugt wird, die sich in der Umgebung des fliegenden Flugzeugs, insbesondere beim Start und Landen, befinden. Als Wirbelerzeuger werden dabei nicht nur Flugzeuge, sondern auch oberirdische und über der See befindliche Objekte betrachtet, deren Wirbelschleppe für ein Flugzeug gefährlich sein kann. Die Gesamtheit der Raumpunkte, in die das Flugzeug einfliegt und in der es Kräften und Momenten ausgesetzt ist, wird als Wirbelschleppengefährdungszone bezeichnet.

Im Laufe der Erfindung wurde das Ziel gesetzt, ein Verfahren und eine Warneinrichtung zu entwickeln, die vor dem möglichen Einflug in eine für das Flugzeug in Bezug auf seine Konstruktion und Flugbedingungen gefährliche Zone einer Wirbelschleppe warnen und die eine Verfügbarkeit von Informationen über die Gegenwart von Wirbelschleppen in der Flugzeugumgebung, die für das Flugzeug eine Gefahr darstellen, über ihre Ausbreitung und eventuelle Vermeidung der Wirbelschleppe mittels einer Bestimmung der prognostizierenden Flugzeug- und Wirbelschleppenposition in einem gewissen Querschnitt vor dem Flugzeug längs dessen Kurs in einem Abstand, in dem das Flugzeug ggf. ein Ausweichmanöver durchführen kann, gewährleisten. Sinnvoll ist dabei eine Bestimmung der Wirbelschleppenposition unter Berücksichtigung der Änderung von Umgebungsparametern und eine Bestimmung der Flugzeugposition unter Berücksichtigung der Flugzeugkonfiguration und von geregelten Flugdurchführungsnormen.

Unter Änderung der Flugzeugkonfiguration ist bzw. sind beispielsweise eine Änderung der Motorenarbeitsweise, darunter auch ein Ausfall eines oder mehrerer Motoren, eine Änderung der Flugzeuggeometrie, beispielsweise der Flügelpfeilform oder eine Vereisung der Flugzeugoberfläche, und andere Änderungen zu verstehen, die zur Änderung der Umströmung durch die entgegenlaufende Strömung und somit zur Änderung aerodynamischer Kräfte und Momente, die durch die Wirkung aerodynamischer Ströme, darunter auch der Wirbelschleppen, verursacht werden, und zur Änderung der Kompensierungsfähigkeit dieser Einwirkungen durch das Flugzeug führen.

Die Erfindung hat sich auch zur Aufgabe gestellt, eine Einrichtung zur Ausführung des Warnverfahrens zu entwickeln.

Die gestellte Aufgabe wurde durch Entwicklung eines Warnverfahrens des eventuellen Einfluges in die Wirbelschleppengefährdungszone gelöst, in dem
- Informationen über die Konfiguration, Position und Orientierung des Flugzeuges im Inertialkoordinatensystem im laufenden Zeitpunkt übermittelt werden,
- Informationen über die Position, geometrische und Massencharakteristik sowie Bewegungsparameter des Wirbelerzeugers im Inertialkoordinatensystem im laufenden Zeitpunkt übermittelt werden,
- Informationen über Position und Bewegungsparameter des Wirbelerzeugers im Inertialkoordinatensystem gespeichert werden,
- Informationen über die Umgebungsparameter im gemeinsamen Bereich des Flugzeugs und Wirbelerzeugers im laufenden Zeitpunkt übermittelt werden,
- die Wirbelschleppenbahn und -intensität als Bahnengesamtheit der Mittelpunkte von Wirbelbereichen im Inertialkoordinatensystem im laufenden Zeitpunkt bestimmt werden,
- Informationen über die Koordinaten der Bahnpunkte und Intensität der Wirbelschleppe als Bahnengesamtheit der Mittelpunkte von Wirbelbereichen im Inertialkoordinatensystem gespeichert werden,
- die Vorhaltezeit ausgewählt wird, in der mindestens ein Manöver der Flugbahnänderung des Flugzeugs möglich ist, wobei dieses Manöver ein Ausweichen des Flugzeugs vor der Wirbelschleppengefährdungszone nach der Warnung über einen möglichen Einflug gewährleistet,
- der Vorhalteabstand berechnet wird, der dem in der Vorhaltezeit geflogenen Abstand gleich ist, eine Kontrollfläche simuliert wird, die im Raum vor dem Flugzeug senkrecht zu seiner Bewegungsrichtung im Vorhalteabstand liegt, sowie der prognostizierende Zeitpunkt der Überschneidung der Kontrollfläche durch das Flugzeug im Inertialkoordinatensystem bestimmt wird,
- die geometrische Charakteristik der Wirbelschleppengefährdungszone als Gesamtheit der Gefährdungszonen der Wirbelbereiche im prognostizierenden Zeitpunkt bestimmt wird,
- die Wirbelschleppenbahn und -intensität als Bahnengesamtheit der Mittelpunkte von Wirbelbereichen im Inertialkoordinatensystem im prognostizierenden Zeitpunkt bestimmt werden,
- die Koordinaten der Überschneidungspunkte der Wirbelschleppenbahn mit der Kontrollfläche im prognostizierenden Zeitpunkt der Überschneidung berechnet werden,
- die Wirbelschleppengefährdungszone um den Überschneidungspunkt der Wirbelschleppenbahn mit der Kontrollfläche als Gesamtheit der Gefährdungszonen von Wirbelbereichen, bei deren Überschneidung die Bewegungsparameter des Flugzeugs ihre zulässigen Grenzen überschreiten können, der Bereich der prognostizierenden Flugzeugpositionen unter Verwendung festgelegter Normen der Flugdurchführung in der prognostizierenden Zeit der Kontrollflächenüberschneidung und die Schwerpunktbereiche um den Bereich der prognostizierenden Positionen erstellt werden und Informationen über dessen Überschneidung mit der Wirbelschleppengefährdungszone an den Benutzer übermittelt werden,
- die Koordinaten der Punkte des Bereichs der prognostizierenden Flugzeugpositionen, Koordinaten der Punkte des Schwerpunktbereichs und Punkte der Wirbelschleppengefährdungszone im mit dem Flugzeug gekoppelten Koordinatensystem bestimmt werden,
- der Abstand des Schwerpunktbereichs zur Wirbelschleppengefährdungszone berechnet wird,
- der Abstand des Bereichs der prognostizierenden Flugzeugpositionen zur Wirbelschleppengefährdungszone berechnet wird,
- der Nullabstand des Schwerpunktbereichs zur Wirbelschleppengefährdungszone des angegebenen Wirbelerzeugers für den Benutzer angezeigt wird und
- der Nullabstand des Schwerpunktbereichs zur Wirbelschleppengefährdungszone des angegebenen Wirbelerzeugers für den Benutzer als Alarm angezeigt wird.

Im Verfahren gemäß der Erfindung wird bzw. werden dabei:
- als Informationen über die Position, geometrische und Massencharakteristik sowie Bewegungsparameter des Wirbelerzeugers vorzugsweise Informationen über den Wirbelerzeugertyp, dessen Bewegungs- und Winkelgeschwindigkeit sowie Koordinaten der Bahnpunkte des Wirbelerzeugers eingesetzt,
- Informationen über die Koordinaten der Bahnpunkte, der Bewegungs- und Winkelgeschwindigkeit des Wirbelerzeugers im Inertialkoordinatensystem gespeichert,
- als Information über die Umgebungsparameter vorzugsweise Informationen über die Größe und Lokalwindgeschwindigkeit, das Windprofil nach der Höhe, die Turbulenz und den Typ der Abschirmfläche eingesetzt,
- die Wirbelschleppenbahn und -intensität im laufenden Zeitpunkt als Bahnengesamtheit der Mittelpunkte von Wirbelbereichen aus gespeicherten Daten über den Wirbelerzeugertyp, die Koordinaten der Bahnpunkte des Wirbelerzeugers, die Bewegungs- und Winkelgeschwindigkeit berechnet oder mittels Geräten gemessen,
- die Kontrollfläche aus Daten über die Position, Orientierung, Bewegungsgeschwindigkeit des Flugzeuges und über die ausgewählte Vorhaltezeit im laufenden Zeitpunkt im Inertialkoordinatensystem simuliert,
- die geometrische Charakteristik der Wirbelschleppengefährdungszone als Gesamtheit der Gefährdungszonen der Wirbelbereiche aus gespeicherten Daten über die Koordinaten der Bahnpunkte und über die Intensität der Wirbelschleppe als Bahnengesamtheit der Mittelpunkte von Wirbelbereichen im Inertialkoordinatensystem und aus Daten über die Position, Bewegungs-und Winkelgeschwindigkeit des Flugzeugs im Inertialkoordinatensystem bestimmt,
- die Wirbelschleppenbahn und -intensität im prognostizierenden Zeitpunkt aus Daten über die Wirbelschleppenbahn und -intensität als Bahnengesamtheit der Mittelpunkte von Wirbelbereichen im Inertialkoordinatensystem bestimmt,
- die Koordinaten der Überschneidungspunkte der Wirbelschleppenbahn mit der Kontrollfläche im prognostizierenden Zeitpunkt aus Daten über die Koordinaten der Kontrollfläche im Inertialkoordinatensystem und über die Wirbelschleppenbahn im Inertialkoordinatensystem im prognostizierenden Zeitpunkt bestimmt,
- die Wirbelschleppengefährdungszone in der Kontrollfläche, der Bereich der prognostizierenden Flugzeugpositionen und der Schwerpunktbereich aus Daten über die Koordinaten der Überschneidungspunkte der Wirbelschleppe mit der Kontrollfläche im prognostizierenden Zeitpunkt und aus Daten über die geometrische Charakteristik der Wirbelschleppengefährdungszone als Gesamtheit der Gefährdungszonen von Wirbelbereichen sowie aus Daten über die Position, Orientierung, Bewegungs- und Winkelgeschwindigkeit des Flugzeugs unter Berücksichtigung der geregelten Normen der Flugdurchführung erstellt,
- die Koordinaten des Bereichs der prognostizierenden Flugzeugpositionen, die Koordinaten des Schwerpunktbereichs und die Koordinaten der Wirbelschleppengefährdungszone im mit dem Flugzeug gekoppelten Koordinatensystem aus Daten über die Koordinaten des Schwerpunktbereichs, des Bereichs der prognostizierenden Flugzeugpositionen unter Verwendung geregelter Normen zur Flugdurchführung, der Wirbelschleppengefährdungszone im prognostizierenden Zeitpunkt sowie aus Daten über die Koordinaten und Position des Flugzeugs, vorzugsweise über die Stampf-, Wind- und Krängungswinkel des Flugzeugs im Inertialkoordinatensystem im laufenden Zeitpunkt, bestimmt.

Bei der Ausführung des Verfahrens gemäß der Erfindung zur Warnung vor einem möglichen Einflug in die Wirbelschleppengefährdungszone werden dem Benutzer nur die für ihn bestimmten Informationen über die Wirbelschleppen zur Verfügung gestellt, die ausreichend sind, um ein wirksames Manöver durchzuführen, das den Einflug in die Wirbelschleppe vermeidet. Durch Vorverarbeitung der Wirbelschleppeninformationen, die in der Erfindung realisiert wird, gelingt es, den Umfang der induzierten Informationen zu verkürzen, wobei nur der erforderliche Informationsteil bleibt. Als Ergebnis wird eine angemessene Aufnahme der räumlichen Flugzeugposition bezüglich der Wirbelschleppe im prognostizierenden Zeitpunkt durch den Benutzer, beispielsweise den Piloten, gewährleistet, wodurch es möglich ist, rechtzeitige Maßnahmen zur Vermeidung des Einflugs in die Wirbelschleppe zu treffen. Darüber hinaus besteht der Vorteil des Verfahrens darin, dass eine Erfassung der auf das Flugzeug wirkenden Kräfte und Momente möglich ist, die durch die Änderung der Flugzeugkonfiguration verursacht werden, weil eine Anpassung des Verfahrens an die Außenbedingungen, an die Flugeigenschaften und an die Arbeitsweise der Flugzeugsysteme gewährleistet wird.

Gemäß der Erfindung ist es sinnvoll, die Verfahrensschritte in Bezug auf jeden einzelnen in der Umgebung des Flugzeugs befindlichen Wirbelerzeuger gleichzeitig durchzuführen.

Ferner ist es beim Verfahren gemäß der Erfindung sinnvoll, die ausgewählte Vorhaltezeit laufend zu korrigieren, wodurch es möglich ist, spezifische Flugbedingungen und Flugaufgabe zu berücksichtigen.

Darüber hinaus ist es beim Verfahren gemäß der Erfindung zweckmäßig, die Koordinaten der prognostizierenden Flugzeugpositionen laufend zu korrigieren, wodurch undeutliche Informationen durch eine Parameteränderung des Bereichs der prognostizierenden Flugzeugpositionen geklärt werden können.

Ferner ist es beim Verfahren gemäß der Erfindung sinnvoll, die Koordinaten des Schwerpunktbereichs laufend zu korrigieren, wodurch es möglich ist, die Zeit zur Entscheidung über ein Ausweichmanöver zu korrigieren.

Dabei ist es gemäß der Erfindung zweckmäßig, die Korrekturen per Hand, halb- oder vollautomatisch vorzunehmen.

Darüber hinaus ist es sinnvoll, dem Benutzer Informationen über die Koordinaten der Kontrollfläche, des Schwerpunktbereichs, des Bereichs der prognostizierenden Flugzeugpositionen und der in der Umgebung des Flugzeugs befindlichen Wirbelschleppengefährdungszonen zur Verfügung zu stellen.

Dabei ist es gemäß der Erfindung zweckmäßig, Informationen über den in der Kontrollfläche befindlichen Bereich der prognostizierenden Flugzeugpositionen und die Lage der Wirbelschleppengefährdungszonen anzuzeigen.

Ferner ist es gemäß der Erfindung wünschenswert, eine Anzeige des Nullabstands vom Schwerpunktbereich zur Wirbelschleppengefährdungszone in der Kontrollfläche und/oder eine Alarmanzeige des Nullabstands des Bereichs der prognostizierenden Flugzeugpositionen zur Wirbelschleppengefährdungszone mittels einer Anzeige durchzuführen, die aus der Gruppe ausgewählt wird, die die visuelle Anzeige, die Audioanzeige und die Tastenanzeige umfasst.

Darüber hinaus ist es gemäß der Erfindung sinnvoll, die Informationen über die ausgewählte Vorhaltezeit, Koordinaten der Kontrollfläche, den Bereich der prognostizierenden Flugzeugpositionen und der Wirbelschleppengefährdungszonen im Laufe der Alarmanzeige des Nullabstands des Bereichs der prognostizierenden Flugzeugpositionen zur Wirbelschleppengefährdungszone zu speichern.

Die gestellte Aufgabe wurde auch mit der Schaffung eines Systems zur Warnung vor einem möglichen Einflug in die Wirbelgefährdungszone gelöst, das Folgendes umfasst:
- eine Überwachungseinrichtung der Flugzeugparameter, die Informationen über die Konfiguration, Position und Orientierung des Flugfahrzeugs im Inertialkoordinatensystem im laufenden Zeitpunkt empfangen kann,
- eine Überwachungseinrichtung des Wirbelerzeugers, die Informationen über die Position, geometrische und Massencharakteristik des Wirbelerzeugers im gleichen Koordinatensystem im laufenden Zeitpunkt sowie über Parameter der Bewegung des Wirbelerzeugers empfangen kann,
- eine Speichereinrichtung, die Informationen über die Lage und Bewegungsparameter des Wirbelerzeugers im Inertialkoordinatensystem abspeichern kann,
- einen Detektor der Umweltparameter, der Informationen über die Umweltparameter im gemeinsamen Bereich des Flugfahrzeugs und Wirbelerzeugers im laufenden Zeitpunkt empfangen kann,
- eine Wirbelschleppenüberwachungseinrichtung, die die Wirbelschleppenbahn und -intensität als Bahnengesamtheit der Mittelpunkte von Wirbelbereichen im Inertialkoordinatensystem bestimmen kann,
- eine Speichereinrichtung, die Informationen über die Koordinaten der Bahnpunkte und Wirbelschleppenintensität als Bahnengesamtheit der Mittelpunkte von Wirbelbereichen im Inertialkoordinatensystem abspeichern kann,
- eine Wähleinrichtung der Vorhaltezeit, in der mindestens das Manöver der Flugbahnänderung des Flugzeugs durchgeführt werden kann, das ein Ausweichen des Flugfahrzeugs vor der Wirbelschleppe nach der Warnung über den möglichen Einflug darin gewährleistet,
- eine Simulationseinrichtung der Kontrollfläche, die den Vorhalteabstand, der dem vom Flugzeug geflogenen Abstand in der Vorhaltezeit gleich ist, berechnen kann und eine Kontrollfläche, die im Raum vor dem Flugzeug und senkrecht zu dessen Bewegungsrichtung im Vorhalteabstand vor ihm liegt, erstellen kann sowie den prognostizierenden Zeitpunkt der Überschneidung dieser Fläche im Inertialkoordinatensystem bestimmen kann,
- eine Einrichtung zur Bestimmung der Parameter der Gefährdungszone, die die geometrische Charakteristik der Wirbelschleppengefährdungszone als Gesamtheit der Gefährdungszonen von Wirbelbereichen im prognostizierenden Zeitpunkt bestimmen kann,
- eine Prognoseeinrichtung, die die Wirbelschleppenbahn des Erzeugers als Bahnengesamtheit der Mittelpunkte von Wirbelbereichen sowie die Intensität der Wirbelschleppe im Inertialkoordinatensystem im prognostizierenden Zeitpunkt bestimmen kann,
- eine Recheneinrichtung der Überschneidungspunkte, die die Koordinaten der Überschneidungspunkte der Wirbelschleppenbahn mit der Kontrollfläche im prognostizierenden Zeitpunkt der Überschneidung mit der Kontrollfläche berechnen kann,
- eine Einrichtung zur Erstellung von Zonen und Bereichen mit einer Erstellung der Wirbelschleppengefährdungszone um den Überschneidungspunkt der Wirbelschleppenbahn mit der Kontrollfläche als Gesamtheit der Gefährdungszonen von Wirbelbereichen, bei deren Überschneidung die Bewegungsparameter des Flugzeugs zulässige Grenzen überschreiten können, einer Erstellung des Bereichs der prognostizierenden Flugzeugposition unter Verwendung festgelegter Normen der Flugdurchführung in der prognostizierenden Zeit der Kontrollflächeüberschneidung, einer Erstellung eines Schwerpunktbereichs um den Bereich der prognostizierenden Positionen und mit einer Übermittlung der Information über dessen Überschneidung mit der Wirbelschleppengefährdungszone an den Benutzer,
- einen Übergangsblock, der die Koordinaten des Bereichs der prognostizierenden Flugzeugpositionen, des Schwerpunktbereichs und der Wirbelschleppengefährdungszone im mit dem Flugzeug gekoppelten Koordinatensystem berechnen kann,
- einen ersten Prüfblock der Überschneidungsbedingungen, der den Abstand vom Schwerpunktbereich zur Wirbelschleppengefährdungszone bestimmen und den Nullabstand festlegen kann,
- einen zweiten Prüfblock der Überschneidungsbedingungen, der den Abstand vom Bereich der prognostizierenden Flugzeugpositionen zur Wirbelschleppengefährdungszone bestimmen und den Nullabstand festlegen kann,
- eine Anzeigeeinrichtung, die eine Anzeige des Nullabstands des Schwerpunktbereichs zur Wirbelschleppengefährdungszone gewährleistet und
- eine Alarmanzeigeeinrichtung, die eine Anzeige des Nullabstands vom prognostizierenden Bereich der Flugzeugpositionen zur Wirbelschleppengefährdungszone gewährleistet.

Dabei ist das Warnsystem gemäß der Erfindung **dadurch gekennzeichnet, dass:**
- die Überwachungseinrichtung der Flugzeugparameter Informationen mindestens über die Konfiguration, Koordinaten, Bewegungsgeschwindigkeit, Stampf-, Wind- und Krängungswinkel des Flugzeugs empfangen kann,
- die Überwachungseinrichtung des Wirbelerzeugers Informationen mindestens über den Wirbelerzeugertyp, die Bewegungs- und Winkelgeschwindigkeit sowie Koordinaten der Bahnpunkte des Wirbelerzeugers empfangen kann,
- der Detektor der Umgebungsparameter Informationen mindestens über die Stärke und Richtung der Lokalwindgeschwindigkeit, das Windprofil nach der Höhe, die Turbulenzintensität und den Typ der Abschirmfläche empfangen kann,
- die Wirbelschleppenüberwachungseinrichtung Bahn und Intensität der Wirbelschleppe als Bahnengesamtheit der Mittelpunkte von Wirbelbereichen aus gespeicherten Daten über den Typ des Wirbelschleppenerzeugers, die Koordinaten der Bahnpunkte, die Bewegungs- und Winkelgeschwindigkeit des Wirbelerzeugers bestimmen kann,
- die Simulationseinrichtung die Kontrollfläche aus Daten über die Position, Orientierung, Bewegungsgeschwindigkeit des Flugfahrzeugs und Vorhaltezeit simulieren kann,
- die Einrichtung zur Bestimmung der Gefährdungszonenparameter die geometrische Charakteristik der Wirbelschleppengefährdungszone des Erzeugers aus gespeicherten Daten über die Koordinaten der Bahnpunkte und Intensität der Wirbelschleppe, die Konfiguration, Position, Bewegungs- und Winkelgeschwindigkeit des Flugzeugs im Inertialkoordinatensystem bestimmen kann,
- die Prognoseeinrichtung die Bahn der erzeugten Wirbelschleppe und deren Intensität aus Daten über die Wirbelschleppenbahn und -intensität als Bahnengesamtheit der Mittelpunkte von Wirbelbereichen im Inertialkoordinatensystem bestimmen kann,
- die Recheneinrichtung der Überschneidungspunkte die Koordinaten der Überschneidungspunkte der Wirbelschleppenbahn mit der Kontrollfläche aus Daten über die Koordinaten der Kontrollfläche und die Bahn der Wirbelschleppe im Inertialkoordinatensystem im prognostizierenden Zeitpunkt berechnen kann,
- die Einrichtung zur Erstellung von Zonen und Bereichen die Wirbelschleppengefährdungszone, die Bereiche der prognostizierenden Flugzeugpositionen und den Schwerpunktbereich aus Daten über die Koordinatenpunkte der Wirbelschleppenüberschneidung im prognostizierenden Zeitpunkt, aus Daten über die geometrische Charakteristik der Gefährdungszone als Gesamtheit der Gefährdungszonen der Wirbelbereiche und aus Daten über die Konfiguration, Position, Orientierung, Bewegungs- und Winkelgeschwindigkeit des Flugzeugs unter Verwendung der für die Flugdurchführung festgelegten Normen im Inertialkoordinatensystem erstellen kann,
- der Übergangsblock die Koordinaten des Bereichs der prognostizierenden Flugzeugpositionen, des Schwerpunktbereichs und der Wirbelschleppengefährdungszone im mit dem Flugzeug gekoppelten Koordinatensystem aus Daten über die Koordinaten des Schwerpunktbereichs und der Wirbelschleppengefährdungszone im prognostizierenden Zeitpunkt im Inertialkoordinatensystem und aus Daten über die Konfiguration, Koordinaten des Flugfahrzeugs und dessen Position sowie vorzugsweise den Stampf-, Wind- und Krängungswinkel im Inertialkoordinatensystem im laufenden Zeitpunkt berechnen kann.

Ferner ist es sinnvoll, dass das Warnsystem gemäß der Erfindung Folgendes enthält: eine Wirbelerzeugerüberwachungseinrichtung, eine Speichereinrichtung, eine Wirbelschleppenüberwachungseinrichtung, eine Einrichtung zur Bestimmung der Parameter der Gefährdungszone, eine Prognoseeinrichtung, eine Recheneinrichtung der Überschneidungspunkte, eine Einrichtung zur Erstellung von Zonen und Bereichen, einen Übergangsblock, zwei Prüfblöcke der Überschneidungsbedingung sowie eine Anzeigeeinrichtung und Alarmanzeigeeinrichtungen, wobei diese Einrichtungen eine simultane Arbeitsweise in Bezug auf jeden einzelnen, in der Umgebung des Flugfahrzeugs befindlichen Wirbelerzeuger gewährleisten.

Ferner ist es gemäß der Erfindung wünschenswert, dass die Wähleinrichtung der Vorhaltezeit mit der Möglichkeit einer laufenden Korrektur der Vorhaltezeit ausgeführt wird.

Darüber hinaus ist es wünschenswert, dass die Einrichtung zur Erstellung von Zonen und Bereichen mit der Möglichkeit einer laufenden Korrektur der Koordinaten des Bereichs der prognostizierenden Flugzeugpositionen ausgeführt wird.

Darüber hinaus ist es wünschenswert, dass die Einrichtung zur Erstellung von Zonen und Bereichen mit der Möglichkeit einer laufenden Korrektur der Koordinaten des Schwerpunktbereichs ausgeführt wird.

Dabei ist es gemäß der Erfindung sinnvoll, dass die laufende Korrektur der Vorhaltezeit, der Koordinaten des Bereichs der prognostizierenden Flugzeugpositionen und des Schwerpunktbereichs per Hand oder halbautomatisch eingestellt werden kann.

Ferner ist es gemäß der Erfindung möglich, eine solche Korrektur vollautomatisch einzustellen.

Diese Ausführung der Warnsystemeinrichtungen stellt eine Flexibilität der Anwendung dieser Einrichtungen sowohl beim Handlenken des Flugzeugs als auch unter Verwendung des automatischen Lenkungssystems sicher.

Darüber hinaus ist es zweckmäßig, dass das Warnsystem gemäß der Erfindung eine Einrichtung zur Visualisierung der Information über den in der Kontrollfläche befindlichen Bereich der prognostizierenden Flugzeugpositionen und der Wirbelschleppengefährdungszonen enthält.

Dabei können die Anzeigeeinrichtung und die Alarmanzeigeeinrichtung aus der Gruppe gewählt werden, die Vorrichtungen zur visuellen Anzeige, Audioanzeige und Tastenanzeige enthält.

Dabei kann das Warnsystem als Einrichtung zur Bestimmung der Parameter der Gefährdungszone von Wirbelerzeugern eine Einrichtung enthalten, die Folgendes umfasst:
- einen Schematisierungsblock des Flugfahrzeugs, der die Gesamtheit von geometrischen Flugzeugcharakteristiken berechnen kann, die für die Berechnung der auf das Flugzeug wirkenden, wirbelinduzierenden Zusatzkräfte und -momente erforderlich sind,
- einen Block zur Bestimmung der im vorgegebenen Raumpunkt auf das Flugzeug wirkenden, wirbelinduzierenden Zusatzkräfte und -momente, der diese aus gespeicherten Koordinaten der Bahnenpunkte von Wirbelmittelpunkten und der Wirbelintensität als Bahnengesamtheit der Mittelpunkte von Wirbelbereichen im Inertialkoordinatensystem und aus der Konfiguration, Position, Bewegungs- und Winkelgeschwindigkeit des Flugzeugs im Inertialkoordinatensystem sowie aus der geometrischen Charakteristik des Flugzeugs berechnen kann,
- einen Block zur Bestimmung des Gefährdungspotentials der Strömung im vorgegebenen Raumpunkt, der die Gefährdung der Strömung nach einem vom Benutzer vorgegebenen Kriterium auswerten kann,
- einen Block zur Bestimmung der Menge der Raumpunkte, in denen die wirbelinduzierenden, aerodynamischen Zusatzkräfte und -momente gefährlich sind, wobei der Block die Koordinaten der in der Gefährdungszone liegenden Raumpunkte durch Auswahl nach einem von dem Benutzer vorgegebenen Gefährdungskriterium bestimmen kann, und
- einen Block zur Bestimmung der geometrischen Charakteristik der Wirbelschleppengefährdungszone, der diese aus den Koordinaten der in der Gefährdungszone liegenden Punkte berechnen kann.

Eine solche Ausführung des Warnsystems gemäß der Erfindung unter Verwendung der Einrichtung zur Bestimmung der Gefährdungszonenparameter ermöglicht, bei der Gefährdungskriteriumsauswahl Besonderheiten der Konfiguration und der Flugbedingungen sowie die Pilotenqualifikation zu berücksichtigen.

Dabei kann als Gefährdungskriterium ein zulässiger Krängungswert des Flugzeugs ausgewählt werden.

Ferner kann als Gefährdungskriterium ein zulässiger Wert des wirbelinduzierenden Krängungsmoments ausgewählt werden.

Gemäß der Erfindung ist es dabei sinnvoll, dass der Block zur Bestimmung der geometrischen Charakteristik der Wirbelschleppengefährdungszone die Gefährdungsschwelle anpassen kann, wodurch die Visualisierung der Wirbelschleppengefährdungszone in der Visualisierungseinrichtung vereinfacht wird.

Dabei enthalten die Wirbelschleppenüberwachungseinrichtung und die Prognoseeinrichtung gemäß der Erfindung eine programmierbare Komponente, und die Einrichtung zur Bestimmung der Gefährdungszonenparameter wird in der Software der programmierbaren Komponente ausgeführt.

Darüber hinaus kann die Einrichtung zur Bestimmung der Gefährdungszonenparameter gemäß der Erfindung eine Datenbank enthalten, die die Charakteristik der Wirbelschleppengefährdungszonen unterschiedlicher Wirbelerzeugertypen unter unterschiedlichen Flugbedingungen enthält.

Ferner kann das Warnsystem gemäß der Erfindung eine Speichereinrichtung der Informationen über die Vorhaltezeit, Koordinaten der Kontrollfläche, des Bereichs der prognostizierenden Flugzeugpositionen und der Wirbelschleppengefährdungszonen im Laufe der Alarmanzeige des Nullabstands des Bereichs der prognostizierenden Flugzeugpositionen zur Wirbelschleppengefährdungszone aufweisen.

### Kurzbeschreibung der Zeichnungen

Im Weiteren wird die Erfindung durch die Beschreibung eines Ausführungsbeispiels des Warnverfahrens mittels eines Warnsystems, das die Anwendung der Erfindung nicht beschränkt und den Erfindungsrahmen nicht sprengt, und durch Zeichnungen erläutert, die zeigen in:
- Fig. 1: eine schematische, räumliche Darstellung eines Flugzeugs, eines Wirbelerzeugers, von dessen Wirbelschleppe und der in der Kontrollfläche abgebildeten Information gemäß dem Warnverfahren gemäß der Beschreibung des Ausführungsbeispiels,
- Fig. 2: ein Blockschaltbild der Ausführung des Verfahrens zur Warnung vor einem möglichen Einflug in die Wirbelschleppengefährdungszone mittels des Warnsystems gemäß der Erfindung,
- Fig. 3: ein Blockschaltbild der Ausführung der Einrichtung zur Parameterbestimmung der Wirbelschleppengefährdungszone und
- Fig. 4: eine schematische Darstellung einer durch das Warnsystem gemäß der Erfindung zur Verfügung gestellten Information auf einem Display der Navigationskarte.

### Beschreibung des Ausführungsbeispiels der Erfindung

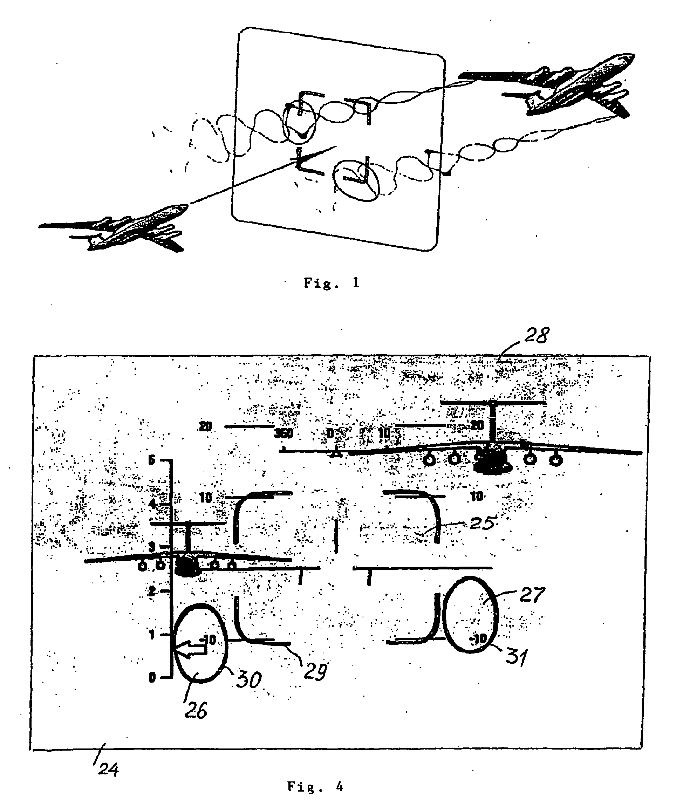

In Fig. 1 ist ein Ausführungsbeispiel eines Warnsystems dargestellt, das als Grundausstattung im Flugzeug ausgeführt wird; der Wirbelerzeuger ist ein anderes Flugzeug, und der Benutzer der Information ist die Besatzung des Flugzeugs. Bei der Beschreibung werden konkrete Begriffe benutzt. Es muss aber berücksichtigt werden, dass jeder Begriff alle äquivalenten Begriffe umfasst, die bei der Lösung ähnlicher Aufgaben benutzt werden.

Bei der Ausführung des Verfahrens zur Warnung vor einem möglichen Einflug in eine Wirbelschleppengefährdungszone wird gemäß der Erfindung eine Anzahl von Informationen über die räumliche Position des Flugzeugs im prognostizierenden Zeitpunkt im errechneten Vorhalteabstand vor dem Flugzeug in der Kontrollfläche und über die mögliche Position der Wirbelschleppen um das Flugzeug, die eine Gefahr darstellen, erstellt. Dabei ist die Information unter Berücksichtigung der Umgebungsbedingungen am Standort der Kontrollfläche korrigiert.

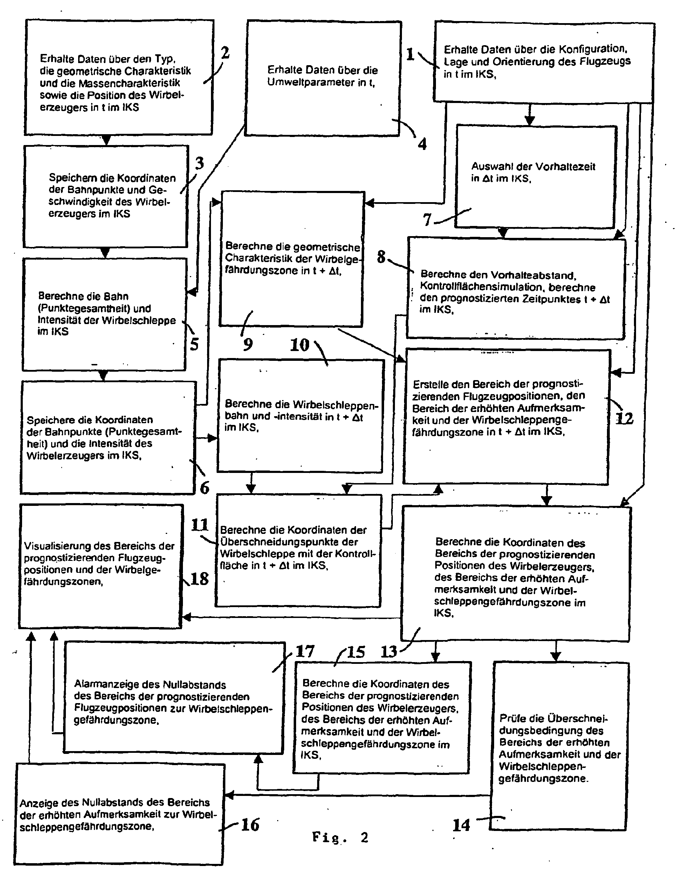

Gemäß der Fig. 2 empfängt eine Überwachungseinrichtung 1 der Flugzeugparameter, die beispielsweise im Computer des automatischen Lenkungssystem des Flugzeugs angeordnet ist, beispielsweise vom Flugzeugnavigationssystem Informationen über die Konfiguration, Koordinaten, Bewegungs- und Winkelgeschwindigkeit des Flugzeugs, Stampf-, Wind- und Krängungswinkel im laufenden Zeitpunkt *t* im Inertialkoordinatensystem (IKS).

Eine Wirbelerzeugerüberwachungseinrichtung 2, die beispielsweise im Computer des automatischen Lenkungssystem des Flugzeugs angeordnet ist, empfängt Informationen über den Wirbelerzeugertyp, dessen Bewegungs- und Winkelgeschwindigkeit sowie über die Koordinaten der Bahnpunkte des Wirbelerzeugers im IKS, beispielsweise vom Bordradar, Forward Viel Radar, vom Fluglotsen oder mittels eines "Information Exchange Multiplex Channel", und eine Speichereinrichtung 3 speichert diese Informationen ab.

Ein Detektor 4 der Umgebungsparameter, der beispielsweise im Computer des automatischen Lenkungssystem des Flugzeugs angeordnet ist, empfängt beispielsweise vom Luftdatensystem oder vom Fluglotsen Daten über die Stärke und Richtung der Lokalwindgeschwindigkeit, das Windprofil nach der Höhe, den Turbulenzgrad und den Typ der Abschirmfläche im gemeinsamen Bereich des Flugzeugs und Wirbelerzeugers im IKS im laufenden Zeitpunkt *t*.

Eine Wirbelschleppenüberwachungseinrichtung 5, die beispielsweise im Computer des automatischen Lenkungssystem des Flugzeuges angeordnet ist, errechnet aufgrund von Daten der Speichereinrichtung 3 die Wirbelschleppenbahn und - intensität als Bahnengesamtheit der Mittelpunkte von Wirbelbereichen im IKS, beispielsweise mittels eines bekannten Algorithmus zur Berechnung der Wirbelschleppenbahn und -intensität (Northwest Research Associates, Inc., Aircraft Vortex Spacing System [AVOSS], Algorithm Version 3.1.1), der die Berechnung der Koordinaten der Wirbelmittelpunkte mittels der Integration einer Differentialgleichung, Ausbreitung der Wirbelgebiete im Raum und in der Zeit beschreibt. Eine Speichereinrichtung 6 speichert diese Daten ab.

Die Parameter der Koordinaten von Wirbelbereichen können auch messtechnisch, beispielweise mittels eines Lidars, mittels einer Messung und Auswertung der Tangentialgeschwindigkeit der Luftströmung mit nachfolgender Berechnung der Wirbelschleppenbahn und -intensität bestimmt werden.

Eine beispielweise im Computer des automatischen Lenkungssystem des Flugzeugs angeordnete Wähleinrichtung 7 der Vorhaltezeit errechnet die für das Manöver der Flugbahnänderung benötigte Vorhaltezeit. Die gewählte Vorhaltezeit kann gemäß der Erfindung unter Berücksichtigung beispielsweise der Pilotenqualifikation oder der Besonderheiten der Flugaufgabe im laufenden Betrieb per Hand, halb- oder vollautomatisch korrigiert werden.

Eine Simulationseinrichtung 8 der Kontrollfläche errechnet aus Daten über die Koordinaten, Bewegungsgeschwindigkeit, Stampf-, Wind- und Krängungswinkel des Flugzeugs von der Einrichtung 7 und Daten über die gewählte Vorhaltezeit von der Einrichtung 7 den Vorhalteabstand, der dem in der Vorhaltezeit geflogenen Abstand gleich ist, simuliert eine Kontrollfläche, die im Raum vor dem Flugzeug und senkrecht zu dessen Bewegungsrichtung im berechneten Vorbehaltabstand zum Flugzeug liegt, beispielweise in Form von Faktoren der Flächengleichung der Kontrollfläche im IKS, und bestimmt den prognostizierenden Zeitpunkt *t* + Δ*t* der Überschneidung der Kontrollfläche im IKS. Als Einrichtung 8 kann jede Recheneinrichtung, die solche Berechnungen ermöglicht, beispielsweise ein Bordrechner, eingesetzt werden.

Eine Prognoseeinrichtung 9 errechnet aus den in der Einrichtung 6 gespeicherten Daten über die Wirbelschleppenbahn und -intensität sowie über den prognostizierenden Zeitpunkt aus der Einrichtung 7 die Koordinaten der Wirbelschleppenbahn und -intensität als Bahnengesamtheit der Mittelpunkte von Wirbelbereichen im prognostizierenden Zeitpunkt *t* + Δ*t* im IKS.

Eine Einrichtung 10 zur Parameterbestimmung der Gefährdungszone bestimmt aus Daten über die Koordinaten, Bewegungs- und Winkelgeschwindigkeit des Flugzeugs aus der Einrichtung 1 und aus Daten über die Koordinaten der Punkte der Wirbelschleppenbahn und -intensität als Bahnengesamtheit der Mittelpunkte von Wirbelbereichen aus der Speichereinrichtung 6 die geometrische Charakteristik der Wirbelgefährdungszone als Gesamtheit der Wirbelgefährdungszonen im prognostizierenden Zeitpunkt *t* + Δ*t* in Übereinstimmung mit den ausgewählten Gefährdungskriterien. Als Gefährdungskriterien können gemäß der Erfindung der zulässige Krängungswinkel des Flugzeugs bzw. das wirbelinduzierende, zulässige Krängungsmoment ausgewählt werden.

Die Wirbelschleppenüberwachungseinrichtung 5 und die Prognoseeinrichtung 9 können gemäß der Erfindung eine programmierbare Komponente, hier die Wirbelschleppenbahn und -intensität, enthalten, und die Einrichtung 10 kann in der Software dieser Komponente ausgeführt werden, beispielsweise in der Datenbank der berechneten, geometrischen Charakteristiken der Wirbelgefährdungszonen unterschiedlicher Erzeugertypen in Abhängigkeit von unterschiedlichen Umgebungsbedingungen und Bewegungsparametern des Wirbelerzeugers, aerodynamischen Kräften und Momenten, beispielsweise Krängungsmomenten, die von Wirbelschleppen unterschiedlicher Intensität induziert werden.

Eine Einrichtung 11 (Fig. 2), die beispielsweise im Computer des Navigationssystems an Bord angeordnet ist, errechnet aus Daten über die Koordinaten der Kontrollfläche die Koordinaten der Überschneidungspunkte der Wirbelschleppenbahn mit der Kontrollfläche im prognostizierenden Zeitpunkt *t* + Δ*t* aus der Einrichtung 8 und aus Daten über die Wirbelschleppenbahn aus der Einrichtung 9 mittels einer Auswahl der auf den beiden Seiten der Kontrollfläche liegenden Punkte der Wirbelschleppenbahn mit Interpolation des Abstands dazwischen.

Eine Einrichtung 12 zur Erstellung von Zonen und Bereichen, beispielsweise als Computerbestandteil des Navigationsinertialsystems an Bord des Flugzeugs, erstellt um den Überschneidungspunkt der Wirbelschleppenbahn mit der Kontrollfläche eine Wirbelgefährdungszone, einen Bereich der prognostizierenden Flugzeugpositionen unter Benutzung von geregelten Flugdurchführungsnormen im prognostizierenden Zeitpunkt *t* + At und einen Schwerpunktbereich als Gesamtheit der Punktemenge auf der Kontrollfläche. Gemäß der Erfindung ermöglicht die Einrichtung 12, eine laufende Korrektur der Koordinaten des Bereichs der prognostizierenden Flugzeugpositionen und des Schwerpunktbereichs vorzunehmen, was für den Piloten bei der Koordinierung des Ausweichmanövers und der Flugaufgabe wichtig ist.

Ein Übergangsblock 13 errechnet die Koordinaten des Bereichs der prognostizierenden Flugzeugpositionen, der Wirbelgefährdungszone und des Schwerpunktbereichs im mit dem Flugzeug gekoppelten Koordinatensystem.

Danach errechnet ein erster Prüfblock 14 der Überschneidungsbedingungen den Abstand vom Schwerpunktbereich zur Wirbelgefährdungszone, wobei der Nullabstand überwacht wird, und ein zweiter Block 15 errechnet den Abstand vom Bereich der prognostizierenden Flugzeugpositionen zur Wirbelgefährdungszone, wobei der Nullabstand überwacht wird.

Daten über den Nullabstand im prognostizierenden Zeitpunkt werden in Anzeigeeinrichtungen 16, 17, beispielsweise im Cockpit, in die Einrichtung 16 zur Audioanzeige, wenn der Abstand zwischen dem Schwerpunktbereich und der Wirbelgefährdungszone Null ist, und danach beispielsweise in die Einrichtung 17 zur Tastenalarmanzeige übermittelt, wenn der Abstand zwischen dem Bereich der prognostizierenden Flugzeugpositionen und der Wirbelgefährdungszone Null ist. Die Tastenanzeige soll den Piloten zum dringenden Treffen von Maßnahmen veranlassen, um ein Ausweichmanöver vor der Gefährdungszone durchzuführen. Der Pilot verfügt dabei über Zeit zum Manövrieren, die vom Piloten unter Verwendung der Bewegungsgeschwindigkeit des Flugzeugs vorgegeben wird. In Abhängigkeit von der Situation kann die Vorhaltezeit nach der ersten Anzeige vom Piloten korrigiert werden, beispielsweise per Hand durch Einstellung eines Zahlenparameters der Vorhaltezeit oder mit automatischer Einstellung der Bedingung der Zeitvergrößerung bzw. -verkleinerung.

Bei einer Vergrößerung der angegebenen Abstände hört die Anzeige auf, wodurch das Ausweichen des Flugzeugs aus der Gefährdungssituation bestätigt und die Anstrengung des Benutzers erleichtert wird.

Es ist sinnvoll, für den Benutzer Daten über die gegenseitige Position des Bereichs der prognostizierenden Flugzeugpositionen und der Gefährdungszone in der Kontrollfläche im prognostizierenden Zeitpunkt mittels einer Visualisierungseinrichtung 18, beispielsweise auf dem Display oder in der Ortungskarte des Flugzeugs, anzuzeigen und die Position der Gefährdungszonen erst nach ihrer Überschneidung mit dem Schwerpunktbereich anzuzeigen, um die für den Piloten nicht aktuellen Daten zu beschränken.

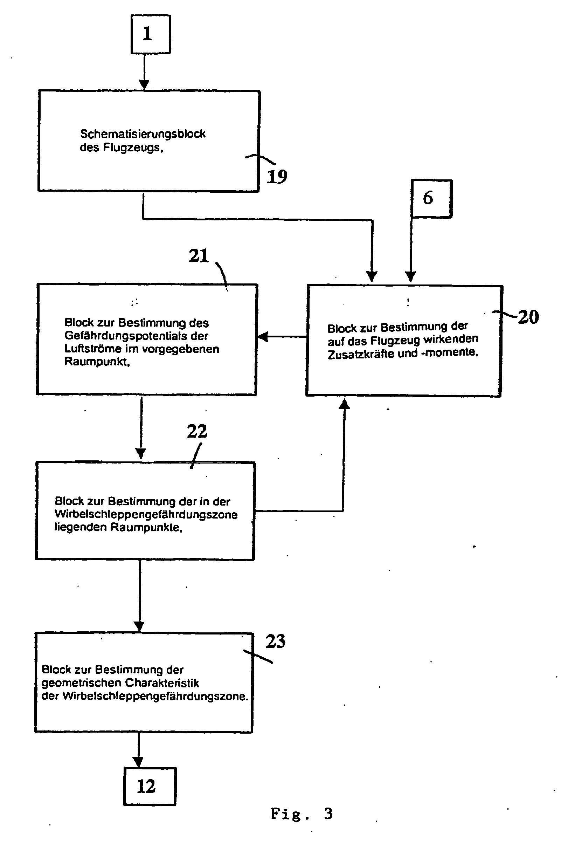

Die Einrichtung 10 zur Bestimmung der Gefährdungszonenparameter kann gemäß der Erfindung ausgeführt werden und enthält, wie aus dem Blockschaltbild der Fig. 3 ersichtlich ist, einen Schematisierungsblock 19 in bekannter Ausführung, der Informationen von der Einrichtung 1 des Warnsystems empfängt und die Gesamtheit der geometrischen Flugzeugcharakteristiken mit der Erfassung der Konfiguration des Flugzeugs errechnet, einen Block 20, der Informationen vom Block 19 und von der Einrichtung 6 des Warnsystems (Fig. 2) empfängt und die wirbelinduzierenden Zusatzkräfte und -momente im Raumpunkt bestimmt. Dann bestimmt ein Block 21 aufgrund eines vorgegebenen Gefährdungskriteriums die Gefährdung der Luftströmung im vorgegebenen Raumpunkt, ein Block 22 bestimmt die der Wirbelgefährdungszone angehörigen Raumpunkte, und ein Block 23 bestimmt die geometrische Charakteristik der Gefährdungszone als Gesamtheit der Punkte und passt die Gefährdungsschwelle zur Vereinfachung der Gefährdungszonenvisualisierung auf dem Display an. Die Daten über die Parameter der Gefährdungszone werden dann in die Einrichtung 8 des Warnsystems übermittelt und im Gefahrenfall des Einflugs des Flugzeugs in die Wirbelzone angezeigt.

In Fig. 4 ist ein Display der Ortungskarte dargestellt, das im Flugzeug zur Kurs- und Symbolanzeige eingesetzt wird, die vom Navigationsträgheitssystem erzeugt werden, beispielsweise Airborne Inertial Navigation System (AINS) mit der Darstellung eines Bereichs 25 der prognostizierenden Flugzeugpositionen und Wirbelgefährdungszonen 26, 27 im Raum im prognostizierenden Zeitpunkt. Der Bereich 25 kann beispielsweise die Form eines Rechtecks haben, dessen Größe den Abmessungen des Bereichs einer möglichen Flugzeugposition im Raum proportional ist. Die Grenzen des Schwerpunktbereichs sind auf dem Display nicht angezeigt, da es gemäß der Erfindung sinnvoll ist, dass die Abbildung der Wirbelgefährdungszonen mit einer gleichzeitigen Anzeige, beispielsweise einer Audioanzeige, auf dem Display erst dann angezeigt werden, wenn die Gefährdungszonen den Schwerpunktbereich überschneiden. Deswegen wird angenommen, dass auf dem Display ein Schwerpunktbereich 28 dargestellt ist. Die Gefährdungszonen 26, 27 können beispielsweise die Form eines Kreises oder einer anderen geometrischen Figur für eine bequeme, visuelle Aufnahme haben. Dabei kann die Abbildung mit visueller Anzeige der Bereiche 25, 26, 27 oder ihrer Grenzen 29, 30, 31 beispielsweise von einer Licht- oder Farbanzeige begleitet werden, wenn sich die Grenze 29 des Bereichs 25 mit der Bereichsgrenze, beispielsweise der Gefährdungszone 26, überschneidet. Diese Tatsache wird von einer Audio- bzw. Tastenalarmanzeige begleitet.

Obwohl im beschriebenen Beispiel nur einer der Wirbelerzeuger dargestellt und das Verhalten nur einer Wirbelgefährdungszone visualisiert und induziert wird, werden selbstverständlich alle Wirbelerzeuger erfasst, die sich im das Flugzeug umgebenden Raum befinden, und die Wirbelschleppen dieser Wirbelerzeuger messtechnisch überwacht sowie auf dem Display nur diejenigen Wirbelschleppengefährdungszonen abgebildet, die für das Flugzeug eine mögliche Gefahr darstellen. Dabei kann der Pilot aufgrund der Bewertung der schematisch abgebildeten Position potentieller Gefährdungszonen eine angemessene Entscheidung über das Flugzeugmanöver treffen, um die Wirbelgefährdungszonen zu vermeiden.

Gemäß der Erfindung ist es zweckmäßig, die laufenden Daten über die ausgewählte Vorhaltezeit, Koordinaten der Kontrollfläche, den Bereich der prognostizierenden Flugzeugpositionen und Wirbelgefährdungszonen im Laufe der Alarmanzeige des Nullabstands vom Bereich der prognostizierten Flugzeugpositionen zur Wirbelgefährdungszone beispielsweise im Flugschreiber abzuspeichern, wodurch ermöglicht wird, die Ursachen eines Flugzeugunfalls festzustellen, um Pilotenhandlungen in derjenigen Situation zu bewerten, in der der Einflug in die Wirbelschleppengefährdungszone beispielsweise zur Änderung der Flugzeugkonfiguration oder Flugbahn geführt hat.

Das Warnsubsystem 4 des möglichen Einflugs in die Wirbelgefährdungszone kann gemäß der Erfindung mit Hilfe der bord- und bodenunterstützten Grundausstattung ausgeführt werden, beispielsweise des Navigationsträgheitssystems an Bord (Airborne Inertial Navigation System/AINS), des Luftdatensystems (Air Data Computer System/ADC), Doppler-Schiebegeschwindigkeitsmessers (Doppler System/DS), Vordersichtradars (Forward View Radar/FVR) und unter Benutzung von Daten, die von der Flugverkehrskontrolle (Air Traffic Control/ATC), dem einheitlichen Anzeigesystem (United Indication System/UIS), dem Multiplexkanal des Datenaustausches (Information Exchange Multiplex Channel/IEMC) übermittel werden, sowie Daten von den Systemen, die mit den genannten Informationssystemen kompatibel sind und in anderen ausländischen Flugzeugen eingesetzt werden, beispielsweise in den amerikanischen Systemen Collision Avoidance System (TCAS) und Traffic Alert.

Darüber hinaus können die Einrichtungen des integrierten Systems gemäß der Erfindung in unterschiedlichen Objekten des Systems der Flugverkehrskontrolle oder des Flugzeugs und des Wirbelerzeugers angeordnet sein, wobei der Benutzer Informationen über die Ergebnisse der Berechnungen mittels einer Anzeige und Visualisierung erhält.

Dabei können als Benutzer dieser Information sowohl die Besatzung eines Flugzeugs als auch Lotsen eines Flughafens oder eines Schiffes sein, die die Besatzung über die empfohlene Flugbahn oder über das erforderliche Manöver des Flugzeugs beraten, um gefährliche Situationen auszuschließen.

Für die Fachleute der Luftverkehrslenkung ist es klar, dass das erfindungsgemäße Warnsystem für die Flug- und Rollkontrolle eingesetzt werden kann, da die Überwachung der Wirbelsituation in der Umgebung der gelandeten Wirbelerzeuger sowie Wirbelerzeuger im Flug mit Hilfe von Warnsystemen durchgeführt werden kann, die selbständig an Bord, auf einem Schiff oder in Flughäfen angeordnet und Bestandteil des einheitlichen Systems sind, das die außerordentliche Situation des Einflugs in die Wirbelgefährdungszone vermeidet. Dabei können als Wirbelerzeuger Flugfahrzeuge unterschiedlichen Typs, beispielsweise Flugzeuge, Hubschrauber, unbemannte Flugzeuge, Seeschiffe, darunter Flugzeugträger, sowie Bodeneinrichtungen und andere Objekte sein.

Für die Fachleute im Flugwesen und in der Luftfahrtelektronik sollte es klar sein, dass in das Warnsystem gemäß der Erfindung Verbesserungen eingebracht werden können, die den Rahmen der Ansprüche dieser Erfindung nicht sprengen und die mit unterschiedlichen Einsatzbedingungen des Systems sowie mit der Verbesserung der Navigations- und Informationssysteme zusammenhängen. Es können beispielsweise unterschiedliche Rechenalgorithmen, die die gestellte Aufgaben genauer lösen, eingesetzt und unterschiedliche Anzeige- und Visualisierungsverfahren der dem Benutzer verfügbaren Information, die die angemessene Aufnahme der erhaltenen Information verbessern, angewandt sowie der Einsatz unterschiedlicher Informationsflüsse vorgesehen werden.

Das System zur Warnung vor einem möglichen Einflug eines Flugzeugs in eine Wirbelschleppengefährdungszone kann sinnvoller Weise als Software ausgeführt werden, die an den Typ des Flugfahrzeugs, an dessen Flugbedingungen und an den Typ der an Bord eingesetzten Ausstattung angepasst werden kann und mit den Informationssystemen der Luftverkehrskontrolle kompatibel ist.

Das Warnsystem gemäß der Erfindung kann mit Hilfe bestehender Rechengeräte leicht ausgeführt und zum Aufbau in unterschiedlichen Flugfahrzeugen sowie Trainingsgeräten für die Piloten- und Lotsenschulung eingesetzt werden.

## Patentansprüche

1. Verfahren zur Warnung vor einem möglichen Einflug in eine Wirbelschleppengefährdungszone, bei dem
- Informationen über die Konfiguration, Position und Orientierung des Flugzeugs im laufenden Zeitpunkt im Inertialkoordinatensystem übermittelt werden,
- Informationen über die Position, geometrische Charakteristik und Massencharakteristik sowie die Bewegungsparameter des Wirbelerzeugers im Inertialkoordinatensystem im laufenden Zeitpunkt übermittelt werden,
- Informationen über die Position und Bewegungsparameter des Wirbelerzeugers im Inertialkoordinatensystem gespeichert werden,
- Informationen über die Umgebungsparameter im gemeinsamen Bereich des Flugzeugs und Wirbelerzeugers im laufenden Zeitpunkt übermittelt werden,
- die Wirbelschleppenbahn und -intensität als Bahnengesamtheit der Mittelpunkte von Wirbelbereichen im laufenden Zeitpunkt im Inertialkoordinatensystem bestimmt werden,
- Informationen über die Koordinaten der Bahnpunkte und Intensität der Wirbelschleppe als Bahnengesamtheit der Mittelpunkte von Wirbelbereichen im Inertialkoordinatensystem gespeichert werden,
- die Vorhaltezeit ausgewählt wird, in der mindestens ein Manöver der Flugbahnänderung des Flugzeugs möglich ist, das ein Ausweichen des Flugzeugs aus der Wirbelschleppengefährdungszone nach der Warnung über einen möglichen Einflug gewährleistet,
- der Vorhalteabstand berechnet wird, der dem in der Vorhaltezeit geflogenen Abstand gleich ist, eine Kontrollfläche simuliert wird, die im Raum vor dem Flugzeug senkrecht zu dessen Bewegungsrichtung im Vorhalteabstand liegt, und der prognostizierende Zeitpunkt der Überschneidung der Kontrollfläche durch das Flugzeug im Inertialkoordinatensystem bestimmt wird,
- die geometrische Charakteristik der Wirbelschleppengefährdungszone als Gesamtheit der Gefährdungszonen der Wirbelbereiche im prognostizierenden Zeitpunkt bestimmt wird,
- die Wirbelschleppenbahn und -intensität als Bahnengesamtheit der Mittelpunkte von Wirbelbereichen im prognostizierenden Zeitpunkt im Inertialkoordinatensystem bestimmt werden,
- die Koordinaten der Überschneidungspunkte der Wirbelschleppenbahn mit der Kontrollfläche im prognostizierenden Zeitpunkt der Überschneidung berechnet werden,
- die Wirbelschleppengefährdungszone um den Überschneidungspunkt der Wirbelschleppenbahn mit der Kontrollfläche als Gesamtheit der Gefährdungszonen von Wirbelbereichen, bei derer Überschneidung die Bewegungsparameter des Flugzeugs die zulässige Grenzen überschreiten können, der Bereich der prognostizierenden Flugzeugpositionen unter Verwendung festgelegter Normen der Flugdurchführung in der prognostizierenden Zeit der Kontrollflächeüberschneidung und die Schwerpunktbereiche um den Bereich der prognostizierenden Positionen erstellt werden, sowie Informationen über dessen Überschneidung mit der Wirbelschleppengefährdungszone an den Benutzer übermittelt werden,
- die Koordinaten der Punkte des Bereichs der prognostizierenden Flugzeugpositionen, die Koordinaten der Punkte des Schwerpunktbereichs und der Punkte von Wirbelschleppengefährdungszone im mit dem Flugzeug gekoppelten Koordinatensystem bestimmt werden,
- der Abstand des Schwerpunktbereichs zur Wirbelschleppengefährdungszone berechnet wird,
- der Abstand des Bereichs der prognostizierenden Flugzeugpositionen zur Wirbelschleppengefährdungszone berechnet wird und
- der Nullabstand des Schwerpunktbereichs zur Wirbelschleppengefährdungszone des angegebenen Wirbelerzeugers für den Benutzer angezeigt wird und der Nullabstand des Schwerpunktbereichs des angegebenen Wirbelerzeugers für den Benutzer als Alarm angezeigt wird.

2. Verfahren nach Anspruch 1,
**dadurch gekennzeichnet, dass**
- als Informationen über die Position, geometrische Charakteristik und Massencharakteristik sowie über die Bewegungsparameter des Wirbelerzeugers vorzugsweise Informationen über den Wirbelerzeugertyp, dessen Bewegungs- und Winkelgeschwindigkeit sowie die Koordinaten der Bahnpunkte des Wirbelerzeugers verwendet werden,
- Informationen über die Koordinaten der Bahnpunkte, der Bewegungs- und Winkelgeschwindigkeit des Wirbelerzeugers im Inertialkoordinatensystem gespeichert werden,
- als Informationen über die Umgebungsparameter vorzugsweise Informationen über die Größe und Lokalwindgeschwindigkeit, das Windprofil nach der Höhe, die Turbulenz und den Typ der Abschirmfläche verwendet werden,
- die Wirbelschleppenbahn und -intensität im laufenden Zeitpunkt als Bahnengesamtheit der Mittelpunkte von Wirbelgebieten aus gespeicherten Daten über den Wirbelerzeugertyp, die Koordinaten der Bahnpunkte, die Bewegungs- und Winkelgeschwindigkeit bestimmt werden,
- die Kontrollfläche aus Daten über die Position, Orientierung, Bewegungsgeschwindigkeit des Flugzeugs und über die ausgewählte Vorhaltezeit im laufenden Zeitpunkt im Inertialkoordinatensystem simuliert wird,
- die geometrische Charakteristik der Wirbelschleppengefährdungszone als Gesamtheit der Gefährdungszonen der Wirbelgebiete aus gespeicherten Daten über die Koordinaten der Bahnpunkte und Intensität der Wirbelschleppe als Bahnengesamtheit der Mittelpunkte von Wirbelbereichen im Inertialkoordinatensystem und aus Daten über die Position, Bewegungs-und Winkelgeschwindigkeit des Flugzeugs im Inertialkoordinatensystem bestimmt wird,
- die Wirbelschleppenbahn und -intensität im prognostizierenden Zeitpunkt aus Daten über die Wirbelschleppenbahn und -intensität als Bahnengesamtheit der Mittelpunkte von Wirbelgebieten im Inertialkoordinatensystem bestimmt werden,
- die Koordinaten der Überschneidungspunkte der Wirbelschleppenbahn mit der Kontrollfläche im prognostizierenden Zeitpunkt aus Daten über die Koordinaten der Kontrollfläche im Inertialkoordinatensystem und über die Wirbelschleppenbahn im prognostizierenden Zeitpunkt im Inertialkoordinatensystem bestimmt werden,
- die Wirbelschleppengefährdungszone in der Kontrollfläche, der Bereich der prognostizierenden Flugzeugpositionen und der Schwerpunktbereich aus Daten über die Koordinaten der Überschneidungspunkte der Wirbelschleppe mit der Kontrollfläche im prognostizierenden Zeitpunkt und aus Daten über die geometrische Charakteristik der Wirbelschleppengefährdungszone als Gesamtheit der Gefährdungszonen der Wirbelbereiche sowie aus Daten über die Position, Orientierung, Bewegungs- und Winkelgeschwindigkeit des Flugzeugs unter Berücksichtigung von geregelten Normen der Flugdurchführung erstellt werden und
- die Koordinaten des Bereichs der prognostizierenden Flugzeugpositionen, die Koordinaten des Schwerpunktbereichs und die Koordinaten der Wirbelschleppengefährdungszone im mit dem Flugzeug gekoppelten Koordinatensystem aus Daten über die Koordinaten des Schwerpunktbereichs, des Bereichs der prognostizierenden Flugzeugpositionen unter Verwendung geregelter Normen zur Flugdurchführung und über die Wirbelschleppengefährdungszone im prognostizierenden Zeitpunkt sowie aus Daten über die Koordinaten und Position des Flugzeugs, vorzugsweise über die Stampf-, Wind- und Krängungswinkel des Flugzeugs, im laufenden Zeitpunkt im Inertialkoordinatensystem bestimmt werden.

3. Verfahren nach Anspruch 1 oder 2,
**dadurch gekennzeichnet,**
**dass** die Verfahrensschritte in Bezug auf jeden in der Umgebung des Flugzeugs befindlichen Wirbelerzeuger gleichzeitig durchgeführt werden.

4. Verfahren nach einem der Ansprüche 1 bis 3,
**dadurch gekennzeichnet,**
**dass** die Vorhaltezeit laufend korrigiert wird.

5. Verfahren nach einem der Ansprüche 1 bis 4,
**dadurch gekennzeichnet,**
**dass** die Koordinaten des Bereichs der prognostizierenden Flugzeugpositionen laufend korrigiert werden.

6. Verfahren nach einem der Ansprüche 1 bis 5,
**dadurch gekennzeichnet,**
**dass** die Koordinaten des Schwerpunktbereichs laufend korrigiert werden.

7. Verfahren nach einem der Ansprüche 1 bis 6,
**dadurch gekennzeichnet,**
**dass** die laufende Korrektur handeingestellt wird.

8. Verfahren nach einem der Ansprüche 1 bis 7,
**dadurch gekennzeichnet,**
**dass** die laufende Korrektur halb- oder vollautomatisch eingestellt wird.

9. Verfahren nach einem der Ansprüche 1 bis 8,
**dadurch gekennzeichnet,**
**dass** dem Benutzer Informationen über die Koordinaten der Kontrollfläche, des Schwerpunktbereichs, des Bereichs der prognostizierenden Flugzeugpositionen und der in der Flugzeugumgebung befindlichen Wirbelgefährdungszonen zur Verfügung gestellt werden.

10. Verfahren nach einem der Ansprüche 1 bis 9,
**dadurch gekennzeichnet,**
**dass** Informationen über die Gegenwart des Bereichs der prognostizierenden Positionen, des Schwerpunktbereichs und der Wirbelgefährdungszonen in der Kontrollfläche visualisiert werden.

11. Verfahren nach einem der Ansprüche 1 bis 10,
**dadurch gekennzeichnet,**
**dass** eine Anzeige des Nullabstands des Schwerpunktbereichs zur Wirbelgefährdungszone in der Kontrollfläche und/oder eine Alarmanzeige des Nullabstands des Bereichs der prognostizierenden Flugzeugpositionen zur Wirbelgefährdungszone mittels einer Anzeige durchgeführt wird, die aus der Gruppe ausgewählt wird, die die visuelle, Audioanzeige und Tastenanzeige enthält.

12. Verfahren nach einem der Ansprüche 1 bis 11,
**dadurch gekennzeichnet,**
**dass** Daten über die Vorhaltezeit, Koordinaten der Kontrollfläche, des Bereichs der prognostizierenden Flugzeugpositionen und Wirbelgefährdungszonen im Laufe der Alarmanzeige des Nullabstands des Bereichs der prognostizierenden Flugzeugpositionen zur Wirbelschleppengefährdungszone gespeichert werden.

13. System zur Warnung vor einem möglichen Einflug in eine Wirbelschleppengefährdungszone, das Folgendes umfasst:
- eine Überwachungseinrichtung (1) der Flugzeugparameter, die Informationen über die Konfiguration, Position und Orientierung eines Flugfahrzeugs im laufenden Zeitpunkt im Inertialkoordinatensystem empfangen kann,
- eine Überwachungseinrichtung (2) des Wirbelerzeugers, die Informationen über die Position, geometrische Charakteristik und Massencharakteristik des Wirbelerzeugers im gleichen Koordinatensystem im laufenden Zeitpunkt sowie über Parameter der Bewegung des Wirbelerzeugers empfangen kann,
- eine Speichereinrichtung (3), die Informationen über die Lage und Bewegungsparameter des Wirbelerzeugers im Inertialkoordinatensystem abspeichern kann,
- einen Detektor (4) der Umweltparameter, der Informationen über die Umweltparameter im gemeinsamen Bereich des Flugfahrzeugs und Wirbelerzeugers im laufenden Zeitpunkt empfangen kann,
- eine Wirbelschleppenüberwachungseinrichtung (5), die die Wirbelschleppenbahn und -intensität als Bahnengesamtheit der Mittelpunkte von Wirbelbereichen im Inertialkoordinatensystem bestimmen kann,
- eine Speichereinrichtung (6), die Informationen über die Koordinaten der Bahnpunkte und Wirbelschleppenintensität als Bahnengesamtheit der Mittelpunkte von Wirbelbereichen im Inertialkoordinatensystem abspeichern kann,
- eine Wähleinrichtung (7) der Vorhaltezeit, in der mindestens ein Manöver der Flugbahnänderung des Flugzeugs durchgeführt werden kann und die ein Ausweichen des Flugfahrzeugs vor der Wirbelschleppe nach der Warnung über den möglichen Einflug in die Wirbelschleppe gewährleistet,
- eine Simulationseinrichtung (8) der Kontrollfläche, die den Vorhalteabstand, der dem vom Flugzeug geflogenen Abstand in der Vorhaltezeit gleich ist, berechnen kann, und eine Kontrollfläche, die im Raum vor dem Flugzeug und senkrecht zu dessen Bewegungsrichtung im Vorhalteabstand vor ihm liegt, erstellen sowie den prognostizierenden Zeitpunkt der Überschneidung dieser Fläche im Inertialkoordinatensystem bestimmen kann,
- eine Einrichtung (10) zur Bestimmung der Parameter der Gefährdungszone, die die geometrische Charakteristik der Wirbelschleppengefährdungszone als Gesamtheit der Gefährdungszonen von Wirbelbereichen im prognostizierenden Zeitpunkt bestimmen kann,
- eine Prognoseeinrichtung (9), die die Wirbelschleppenbahn des Erzeugers als Bahnengesamtheit der Mittelpunkte von Wirbelbereichen sowie die Intensität der Wirbelschleppe im prognostizierenden Zeitpunkt im Inertialkoordinatensystem bestimmen kann,
- eine Recheneinrichtung (11) der Überschneidungspunkte, die die Koordinaten der Überschneidungspunkte der Wirbelschleppenbahn mit der Kontrollfläche im prognostizierenden Zeitpunkt der Überschneidung mit der Kontrollfläche berechnen kann,
- eine Einrichtung (12) zur Erstellung von Zonen und Bereichen, die die Erstellung der Wirbelschleppengefährdungszone um den Überschneidungspunkt der Wirbelschleppenbahn mit der Kontrollfläche als Gesamtheit der Gefährdungszonen von Wirbelbereichen, bei deren Überschneidung die Bewegungsparameter des Flugzeugs die zulässige Grenzen überschreiten können, die Erstellung des Bereichs der prognostizierenden Flugzeugposition unter Verwendung festgelegter Normen der Flugdurchführung in der prognostizierenden Zeit der Kontrollflächeüberschneidung, die Erstellung eines Schwerpunktbereichs um den Bereich der prognostizierenden Positionen und die Übermittlung der Information über dessen Überschneidung mit der Wirbelschleppengefährdungszone an den Benutzer gewährleistet,
- einen Übergangsblock (13), der die Koordinaten des Bereichs der prognostizierenden Flugzeugpositionen, des Schwerpunktbereichs und der Wirbelschleppengefährdungszone im mit dem Flugzeug gekoppelten Koordinatensystem berechnen kann,
- einen ersten Prüfblock (14) der Überschneidungsbedingungen, der den Abstand vom Schwerpunktbereich zur Wirbelschleppengefährdungszone bestimmen und den Nullabstand festlegen kann,
- einen zweiten Prüfblock (15) der Überschneidungsbedingungen, der den Abstand vom Bereich der prognostizierenden Flugzeugpositionen zur Wirbelschleppengefährdungszone bestimmen und den Nullabstand festlegen kann,
- eine Anzeigeeinrichtung (16), die eine Anzeige des Nullabstands des Schwerpunktbereichs zur Wirbelschleppengefährdungszone gewährleistet, und
- eine Alarmanzeigeeinrichtung (17), die eine Anzeige des Nullabstands vom prognostizierenden Bereich der Flugzeugpositionen zur Wirbelschleppengefährdungszone gewährleistet.

14. System nach Anspruch 13,
**dadurch gekennzeichnet, dass**
- die Überwachungseinrichtung (1) der Flugzeugparameter Informationen mindestens über die Konfiguration, Koordinaten, Bewegungsgeschwindigkeit, Stampf-, Wind- und Krängungswinkel des Flugzeugs empfangen kann,
- die Überwachungseinrichtung (2) des Wirbelerzeugers Informationen mindestens über den Wirbelerzeugertyp, dessen Bewegungs- und Winkelgeschwindigkeit sowie die Koordinaten der Bahnpunkte des Wirbelerzeugers empfangen kann,
- der Detektor (4) der Umgebungsparameter Informationen mindestens über die Stärke und Richtung der Lokalwindgeschwindigkeit, das Windprofil nach der Höhe, die Turbulenzintensität und den Typ der Abschirmfläche empfangen kann,
- die Wirbelschleppenüberwachungseinrichtung (5) die Bahn und Intensität der Wirbelschleppe als Bahnengesamtheit der Mittelpunkte von Wirbelgebieten aus gespeicherten Daten über den Typ des Wirbelschleppenerzeugers, die Koordinaten der Bahnpunkte des Wirbelerzeugers und die Bewegungs- und Winkelgeschwindigkeit bestimmen kann,
- die Simulationseinrichtung (8) die Kontrollfläche aus Daten über die Position, Orientierung, Bewegungsgeschwindigkeit des Flugfahrzeugs und die Vorhaltezeit simulieren kann,
- die Einrichtung (10) zur Bestimmung der Gefährdungszoneparameter die geometrische Charakteristik der Wirbelschleppengefährdungszone des Wirbelerzeugers aus gespeicherten Daten über die Koordinaten der Bahnpunkte und Intensität der Wirbelschleppe, die Konfiguration, Position, Bewegungs- und Winkelgeschwindigkeit des Flugzeugs im Inertialkoordinatensystem bestimmen kann,
- die Prognoseeinrichtung (9) die Bahn der erzeugten Wirbelschleppe und deren Intensität aus Daten über die Wirbelschleppenbahn und -intensität als Bahnengesamtheit der Mittelpunkte von Wirbelbereichen im Inertialkoordinatensystem bestimmen kann,
- die Recheneinrichtung (11) der Überschneidungspunkte die Koordinaten der Überschneidungspunkte der Wirbelschleppenbahn mit der Kontrollfläche aus Daten über die Koordinaten der Kontrollfläche, der Bahn der Wirbelschleppe im prognostizierenden Zeitpunkt im Inertialkoordinatensystem berechnen kann,
- die Einrichtung (12) zur Erstellung von Zonen und Bereichen die Wirbelschleppengefährdungszone, Bereiche der prognostizierenden Flugzeugpositionen und den Schwerpunktbereich aus Daten über die Koordinatenpunkte der Wirbelschleppenüberschneidung im prognostizierenden Zeitpunkt, Daten über die geometrische Charakteristik der Gefährdungszone als Gesamtheit der Gefährdungszonen der Wirbelbereiche und Daten über die Konfiguration, Position, Orientierung, Bewegungs- und Winkelgeschwindigkeit des Flugzeugs unter Verwendung von für die Flugdurchführung festgelegten Normen im Inertialkoordinatensystem erstellen kann und
- der Übergangsblock (13) die Koordinaten des Bereichs der prognostizierenden Flugzeugpositionen, des Schwerpunktbereichs und der Wirbelschleppengefährdungszone im mit dem Flugzeug gekoppelten Koordinatensystem aus Daten über die Koordinaten des Schwerpunktbereichs und der Wirbelschleppengefährdungszone im prognostizierenden Zeitpunkt im Inertialkoordinatensystem und aus Daten über die Konfiguration, Koordinaten des Flugfahrzeugs und dessen Position sowie vorzugsweise über die Stampf-, Wind- und Krängungswinkel im laufenden Zeitpunkt im Inertialkoordinatensystem berechnen kann.

15. System nach Anspruch 13 oder 14,
**dadurch gekennzeichnet,**
**dass** es eine Wirbelerzeugerüberwachungseinrichtung (2), eine Speichereinrichtung (3, 6), eine Wirbelschleppenüberwachungseinrichtung (5), eine Einrichtung (10) zur Bestimmung der Parameter der Gefährdungszone, eine Prognoseeinrichtung (9), eine Recheneinrichtung (11) der Überschneidungspunkte, eine Einrichtung (12) zur Erstellung von Zonen und Bereichen, zwei Prüfblöcke (14, 15) der Überschneidungsbedingung sowie eine Anzeigeeinrichtung und eine Alarmanzeigeeinrichtung umfasst, wobei diese Einrichtungen eine simultane Arbeitsweise in Bezug auf jeden einzelnen in der Umgebung des Flugfahrzeugs befindlichen Wirbelerzeuger gewährleisten.

16. System nach einem der Ansprüche 13 bis 15,
**dadurch gekennzeichnet,**
**dass** die Wähleinrichtung (7) der Vorhaltezeit mit der Möglichkeit einer laufenden Korrektur der Vorhaltezeit ausgeführt wird.

17. System nach einem der Ansprüche 13 bis 16,
**dadurch gekennzeichnet,**
**dass** die Einrichtung (12) zur Erstellung von Zonen und Bereichen mit der Möglichkeit einer laufenden Korrektur der Koordinaten des Bereichs der prognostizierenden Flugzeugpositionen ausgeführt wird.

18. System nach einem der Ansprüche 13 bis 17,
**dadurch gekennzeichnet,**
**dass** die Einrichtung (12) zur Erstellung von Zonen und Bereichen mit der Möglichkeit einer laufenden Korrektur der Koordinaten des Schwerpunktbereichs ausgeführt wird.

19. System nach einem der Ansprüche 13 bis 18,
**dadurch gekennzeichnet,**
**dass** die Korrektur handeingestellt wird.

20. System nach einem der Ansprüche 13 bis 18,
**dadurch gekennzeichnet,**
**dass** die Korrektur halb- oder vollautomatisch eingestellt wird.

21. System nach einem der Ansprüche 13 bis 20,
**dadurch gekennzeichnet,**
**dass** es eine Einrichtung (18) zur Visualisierung von Daten über die Gegenwart des Bereichs der prognostizierenden Flugzeugpositionen und Wirbelschleppengefährdungszonen in der Kontrollfläche enthält.

22. System nach einem der Ansprüche 13 bis 21,
**dadurch gekennzeichnet,**
**dass** die Anzeigeeinrichtung (16) und die Alarmanzeigeeinrichtung (17) aus der Gruppe gewählt werden, die die visuelle Anzeige, die Audioanzeige und die Tastenanzeige enthält.

23. System nach einem der Ansprüche 13 bis 22,
**dadurch gekennzeichnet,**
**dass** als Einrichtung (10) zur Bestimmung der Parameter der Wirbelgefährdungszone eine Einrichtung vorgesehen ist, die Folgendes aufweist:
- einen Schematisierungsblock (19) des Flugfahrzeugs, der die Gesamtheit von geometrischen Flugzeugcharakteristiken berechnen kann, die für die Berechnung der auf das Flugzeug wirkenden, wirbelinduzierenden Zusatzkräfte und -momente erforderlich sind,
- einen Block (20) zur Bestimmung der im vorgegebenen Raumpunkt auf das Flugzeug wirkenden, wirbelinduzierenden Zusatzkräfte und -momente, der diese aus den gespeicherten Koordinaten der Bahnenpunkte von Wirbelmittelpunkten und der Wirbelintensität als Bahnengesamtheit der Mittelpunkte von Wirbelbereichen im Inertialkoordinatensystem und aus der Konfiguration, Position, Bewegungs- und Winkelgeschwindigkeit des Flugzeugs im Inertialkoordinatensystem sowie aus der geometrischen Charakteristik des Flugzugs berechnen kann,
- einen Block (21) zur Bestimmung des Gefährdungspotentials der Strömung im vorgegebenen Raumpukt, der die Gefahrdung der Strömung nach einem vom Benutzer vorgegebenen Kriterium auswerten kann,
- einen Block (22) zur Bestimmung der Menge der Raumpunkte, in denen die wirbelinduzierenden, aerodynamischen Zusatzkräfte und -momente gefährlich sind, der die Koordinaten der in der Gefährdungszone liegenden Raumpunkte durch Auswahl nach einem vom Benutzer vorgegebenen Gefährdungskriterium bestimmen kann, und
- einen Block (23) zur Bestimmung der geometrischen Charakteristik der Wirbelschleppengefährdungszone, der diese Charakteristik aus den Koordinaten der in der Gefährdungszone liegenden Punkte berechnen kann.

24. System nach einem der Ansprüche 13 bis 23,
**dadurch gekennzeichnet,**
**dass** als Gefährdungskriterium der zulässige Krängungswinkel des Flugzeugs ausgewählt wird.

25. System nach einem der Ansprüche 13 bis 24,
**dadurch gekennzeichnet,**
**dass** als Gefährdungskriterium das zulässige, wirbelinduzierende Krängungsmoment ausgewählt wird.

26. System nach einem der Ansprüche 13 bis 25,
**dadurch gekennzeichnet,**
**dass** der Block (23) zur Bestimmung der geometrischen Charakteristik der Wirbeschleppengefährdungszone die Gefährdungsschwelle anpassen kann.

27. System nach einem der Ansprüche 13 bis 26,
**dadurch gekennzeichnet,**
**dass** die Wirbelschleppenüberwachungseinrichtung (5) und die Prognoseeinrichtung (9) eine programmierbare Komponente enthalten und die Einrichtung (10) zur Bestimmung der Parameter der Wirbelschleppengefährdungszone in der Software dieser programmierbaren Komponente ausgeführt wird.

28. System nach einem der Ansprüche 13 bis 27,
**dadurch gekennzeichnet,**
**dass** die Einrichtung (10) zur Bestimmung der Parameter der Wirbelschleppengefährdungszone eine Datenbank mit der Charakteristik der Wirbelschleppengefährdungszonen unterschiedlicher Wirbelerzeuger enthält.

29. System nach einem der Ansprüche 13 bis 28,
**dadurch gekennzeichnet,**
**dass** es eine Einrichtung zum Speichern und/oder zur Übermittlung von Daten über die Vorhaltezeit, Koordinaten der Kontrollfläche, den Bereich der prognostizierenden Flugzeugpositionen und der in der Umgebung des Flugzeugs befindlichen Wirbelschleppengefährdungszonen im Laufe mindestens der Alarmanzeige des Nullabstands des Bereichs der prognostizierenden Flugzeugpositionen zur Wirbelschleppengefährdungszone umfasst.

## Claims

1. A method of warning against a possible entry into a trailing vortex zone, wherein
- information regarding the configuration, position and orientation of the aircraft in current time is transmitted in the inertial coordinate system,
- information regarding the position, geometric characteristics and mass characteristics, as well as the movement parameters of the vortex generator, is transmitted in the inertial coordinate system in current time,
- information regarding the position and movement parameters of the vortex generator is stored in the inertial coordinate system,
- information regarding the environmental parameters in the common area of the aircraft and the vortex generator is transmitted in current time in the inertial coordinate system,
- the trailing vortex zone and intensity in the form of a sum of the paths of the foci of vortex areas is determined in current time in the inertial coordinate system,
- information regarding the coordinates of the path points and intensity of the trailing vortex is stored in the inertial coordinate system in the form of a sum of the paths of the foci of vortex areas,
- that particular lead time is selected, in which at least one maneuver of the flight path change of the aircraft is possible which assures the avoidance of the trailing vortex danger zone by the aircraft following the warning regarding a possible penetration,
- the lead distance which is equal to the distance flown in the lead time is computed, a flat control area is simulated, which is located in the space in front of the aircraft perpendicularly in respect to its direction of movement in the lead time, and the forecast time of the intersection of the aircraft with the control area is computed in the inertial coordinate system,
- the geometric characteristics of the trailing vortex danger zone is determined as the total of danger zones of the cortex areas at the forecast time,
- the trailing vortex path and intensity are determined in the inertial coordinate system as the total of the foci of vortex areas at the forecast time,
- the coordinates of the intersection points of the trailing vortex path with the control area at the forecast time of intersection is computed,
- the trailing vortex danger zone around the intersection point of the trailing vortex path with the control area as the total of the vortex area danger zones at which, when intersected, the movement parameters of the aircraft could exceed permissible limits, and the range of forecast aircraft positions are determined by the use of fixed standards of the flight performance in the forecast time of the control area intersection, and the information regarding its intersection with the trailing vortex danger zone is transmitted to the user,
- the distance of the focus areas from the trailing vortex danger zone is computed,
- the distance of the area of the forecast aircraft positions from the trailing vortex danger zone is computed, and
- the zero distance of the focus area from the trailing vortex danger zone of the identified vortex generator is displayed to the user and the zero distance of the focus area of the identified vortex generator is indicated to the user in the form of an alarm.

2. The method in accordance with claim 1,
**characterized in that**
- information regarding the vortex generator type, its movement speed and angular speed, as well as the coordinates of the path points of the vortex generator are preferably used as the information regarding the position, geometric characteristics and mass characteristics, as well as the movement parameters, of the vortex generator,
- information regarding the coordinates of the path points, the movement speed and angular speed of the vortex generator are stored in the inertial coordinate system,
- information regarding environmental parameters is used, preferably information regarding the strength and local wind speed, the wind profile in accordance with altitude, turbulence and the type of screening area,
- by means of stored data regarding the vortex generator type, the coordinates of the path points and the movement and angular speeds, the trailing vortex path and intensity are determined in actual time as the sum of the paths of the foci of vortex areas,
- the control area is simulated in the inertial coordinate system from data regarding the position, orientation, speed of movement of the aircraft and by means of the lead time selected at the current time,
- the geometric characteristics of the trailing vortex danger zone as the sum of the danger zones of the vortex areas is determined in the inertial coordinate system from stored data regarding the path points and intensity of the trailing vortex as the path total of the foci of the vortex areas, and in the inertial coordinate system from data regarding the position, movement speed and angular speed of the aircraft,
- the trailing vortex path and intensity at the forecast time are determined in the inertial coordinate system from data regarding the trailing vortex path and intensity as the path total of the foci of the vortex areas,
- from data in the inertial coordinate system, the coordinates of the intersection points of the trailing vortex path with the control area at the forecast time are determined in the inertial coordinate system in regard to the coordinates of the control area and of the trailing vortex path at the forecast time,
- the trailing vortex danger zone in the control area, the range of the forecast aircraft positions and the focus area are derived from data regarding the coordinates of the intersection points of the trailing vortex with the control area at the forecast time, and from data regarding the geometric characteristics of the trailing vortex danger zone as the sum of the danger zones of the vortex areas, as well as from data regarding the position, orientation, movement speed and angular speed of the aircraft, taking into consideration controlled standards of the flight performance, and
- the coordinates of the area of the forecast aircraft positions, the coordinates of the focus area, and the coordinates of the trailing vortex danger zone in the coordinate system coupled with the aircraft are determined in the inertial coordinate system in actual time from data regarding the coordinates of the focus area and of the area of the forecast aircraft positions by the use of controlled standards for flight performance, and regarding the trailing vortex danger zone at the forecast time, as well as from data regarding the coordinates and position of the aircraft, preferably via heaving, wind and heeling angles of the aircraft.

3. The method in accordance with claim 1 or 2,
**characterized in that**
the method steps are performed simultaneously in regard to every vortex generator located in the vicinity of the aircraft.

4. The method in accordance with one of claims 1 to 3,
**characterized in that**
the lead time is continuously corrected.

5. The method in accordance with one of claims 1 to 4,
**characterized in that**
the coordinates of the area of the forecast aircraft positions are continuously corrected.

6. The method in accordance with one of claims 1 to 5,
**characterized in that**
the coordinates of the focus area are continuously corrected.

7. The method in accordance with one of claims 1 to 6,
**characterized in that**
the continuous corrections are made manually.

8. The method in accordance with one of claims 1 to 7,
**characterized in that**
the continuous corrections are made semi-automatically or fully automatically.

9. The method in accordance with one of claims 1 to 8,
**characterized in that**
information regarding the coordinates of the control area, of the focus area, the area of the forecast aircraft positions and of the vortex danger zones located in the vicinity of the aircraft are made available to the user.

10. The method in accordance with one of claims 1 to 9,
**characterized in that**
information regarding the presence of the area of the forecast positions, of the focus area and of the vortex danger zones are visually displayed in the control area.

11. The method in accordance with one of claims 1 to 10,
**characterized in that**
a display of the zero distance of the focus area in regard to the vortex danger zone is performed in the control area, and/or an alarm indication of the forecast aircraft position in regard to the vortex danger zone is performed by means of an indication selected from the group containing the audio-visual indicator and key indicator.

12. The method in accordance with one of claims 1 to 11,
**characterized in that**
data regarding the lead time, coordinates of the control area, the area of the forecast aircraft positions and the vortex danger zones are stored in the course of the alarm indication of the zero distance of the forecast aircraft position in regard to the trailing vortex danger zone.

13. A system for warning against a possible entry into a trailing vortex zone, comprising the following:
- a monitoring arrangement (1) of the aircraft parameters, which can receive information regarding the configuration, position and orientation of an aerial vehicle in actual time in an inertial coordinate system,
- a monitoring arrangement (2) of the vortex generator, which can receive information regarding the position, geometric characteristics and mass characteristics of the vortex generator in the same coordinate system at the current time, as well as regarding parameters of the movement of the vortex generator,
- a memory storage arrangement (3), which can store information regarding the positional and movement parameters of the vortex generator in the inertial coordinate system,
- a detector (4) of the environmental parameters, which can receive information regarding the environmental parameters in the common space of the aerial vehicle and the vortex generator,
- a trailing vortex monitoring arrangement (5), which can determine the trailing vortex path and intensity as a sum of the paths of the foci of vortex areas in the inertial coordinate system,
- a memory storage arrangement (6), which can store information regarding the coordinates of the path points and the trailing vortex intensity as a sum of the paths of the foci of vortex areas in the inertial coordinate system,
- a selection arrangement (7) of the lead time, in which at least one maneuver for a change of the flight path of an aircraft can be performed, and which assures an evasion of the aerial vehicle before reaching the trailing vortex and following the warning regarding a possible entry into the trailing vortex,
- a simulation arrangement (8) of the control area, which can compute the lead distance which is equal to the distance flown by the aircraft in the lead time, and a control area, located in the space in front of the aircraft and perpendicularly to its direction of movement, and can as well determine the forecast time of an intersection of this area in the inertial coordinate system,
- an arrangement (10) for the determination of the parameters of the danger zone, which can determine the geometric characteristics of the trailing vortex danger zone as a sum of the danger zones of vortex areas at the forecast time,
- a forecasting arrangement (9), which can determine the trailing vortex path of the generator as the sum of the paths of the foci of vortex areas, as well as the intensity of the trailing vortex at the forecast time in the inertial coordinate system,
- a computing arrangement (11) for the intersection points, which can compute the coordinates of the intersection points of the trailing vortex path with the control area at the forecast time of intersection with the control area,
- an arrangement (12) for the creation of zones and areas, which assures the determination of the trailing vortex danger zone around the intersection point between the trailing vortex path and the control area as the sum of the danger zones of vortex areas in which, when intersected, the movement parameters of the aircraft could exceed the permissible threshold, the determination of the area of the forecast aircraft position by means of the use of controlled standards of flight performance in the forecast time at the control area intersection, the determination of a focus area around the area of the forecast positions, and the transmission of the information regarding its intersection with the trailing vortex danger zone to the user,
- a transition block (13), which can compute the coordinates of the areas of the forecast aircraft positions, of the focus area and the trailing vortex danger area in the coordinate system coupled with the aircraft,
- a first test block (14) of the intersection conditions, which can determine the distance from the focus area to the trailing vortex danger zone and can determine the zero distance,
- a second test block (15) of the intersection conditions, which can determine the distance from the area of the forecast aircraft positions to the trailing vortex danger zone and can determine the zero distance,
- an indicator arrangement (16), which assures the indication of the zero distance from the trailing vortex danger zone, and
- an alarm indicator arrangement (17), which assures the indication of the zero distance from the forecast area of the aircraft positions to the trailing vortex danger zone.

14. The system in accordance with claim 13,
**characterized in that**
- the monitoring arrangement (1) of the aircraft parameters can receive information at least regarding the configuration, coordination, speed of movement, heaving, wind and heeling angles of the aircraft,
- the monitoring arrangement (2) of the vortex generator can receive information regarding the type of vortex generator, its movement speed and angular speed, as well as the coordinates of the path points of the vortex generator,
- a detector (4) of the environmental parameters can receive information at least regarding the strength and direction of the local wind, the wind profile in accordance with the altitude, turbulence and the type of screening area,
- the trailing vortex monitoring arrangement (5) can determine the path and intensity of the trailing vortex as a sum of the path of the foci of vortex areas from stored data regarding the type of trailing vortex generator, the coordinates of the path points of the vortex generator and the movement speed and angular speed,
- the simulation arrangement (8) can simulate the control area from data regarding the position, orientation, speed of movement of the aerial vehicle and the lead time,
- the arrangement (10) for the determination of the danger zone parameters can determine the geometric characteristics of the trailing vortex danger zone of the vortex generator in the inertial coordinate system from stored data regarding the coordinates of the path points and the intensity of the trailing vortex, the configuration, position, movement speed and angular speed of the aircraft,
- the prognostic arrangement (9) can determine the path of the generated trailing vortex and its intensity in the inertial coordinate system from data regarding the trailing vortex path and intensity as the sum of the paths of the foci of vortex areas,
- the computing arrangement (11) for the intersection points of the coordinates of the trailing vortex path can compute from data in the inertial coordinate system regarding the coordinates of the control area the path of the trailing vortex at the forecast time,
- the arrangement (12) for the creation of zones and areas of the trailing vortex danger zones, areas of the forecast aircraft positions and the focus area from data regarding the coordinate points of the trailing vortex intersection at the forecast time, can provide data regarding the geometric characteristics of the danger zone as the sum of the danger zones of the vortex areas, and data regarding the configuration, position, orientation, movement speed and angular speed of the aircraft by the use of fixed standards for the flight performance in the inertial coordinate system, and
- the transition block (13), which can compute the coordinates of the areas of the forecast aircraft positions, of the focus area and the trailing vortex danger area in the coordinate system coupled with the aircraft from data regarding the coordinates of the focus area and of the trailing vortex danger zone at the forecast time in the inertial coordinate system, and from data regarding the configuration, coordinates of the aerial vehicle and its position, preferably by means of the heaving, wind and heeling angles at the actual time in the inertial coordinate system.

15. The system in accordance with claim 13 or 14,
**characterized in that**
it comprises a vortex generation monitoring arrangement (2), a memory storage arrangement (3, 6), a trailing vortex monitoring arrangement (5), an arrangement (10) for determining the parameters of the danger zone, a prognostic arrangement (9), a computing arrangement (11) of the intersection points, an arrangement (12) for the creation of zones and areas, two test blocks (14, 15) of the intersection conditions, as well as an indicator arrangement and an alarm indicator arrangement, wherein these arrangements assure a simultaneous operation in regard to every single vortex generator located in the vicinity of the aerial vehicle.

16. The system in accordance with one of claims 13 to 15,
**characterized in that**
the selection arrangement (7) of the lead time is embodied with the possibility of a running correction of the lead time.

17. The system in accordance with one of claims 13 to 16,
**characterized in that**
the arrangement (12) for the creation of zones and areas is embodied with the possibility of a running correction of the coordinates of the area of the forecast aircraft positions.

18. The system in accordance with one of claims 13 to 17,
**characterized in that**
the arrangement (12) for the creation of zones and areas is embodied with the possibility of a running correction of the coordinates of the focus area.

19. The system in accordance with one of claims 13 to 18,
**characterized in that**
the correction is manually set.

20. The system in accordance with one of claims 13 to 18,
**characterized in that**
the correction is set semi-automatically or fully automatically.

21. The system in accordance with one of claims 13 to 20,
**characterized in that**
it contains an arrangement (18) for the visual display of data regarding the presence of the area of the forecast aircraft positions and trailing vortex danger zones.

22. The system in accordance with one of claims 13 to 21,
**characterized in that**
the indicator arrangement (16) and the alarm indicator arrangement (17) are selected from the group containing the visual indicator, the audio indicator and key indicator.

23. The system in accordance with one of claims 13 to 22,
**characterized in that**
an arrangement is provided as the arrangement (10) for determining the parameters of the danger zone, which contains the following:
- a schematizing block (19) of the aerial vehicle, which can compute the sum of geometric aircraft characteristics which are required for the computation of the additional forces and moments acting on the aircraft and which induce vortices,
- a block (20) for determining the vortex-inducing additional forces and moments acting on the aircraft in the predetermined spatial point, which can compute these in the inertial coordinate system from the stored coordinates of the path points of vortex foci and from the vortex intensity as a path sum of the foci of vortex areas and from the configuration, position movement speed and angular speed of the aircraft in the inertial coordinate system, as well as from the geometric characteristics of the aircraft,
- a block (21) for determining the interference potential of the flow in the predetermined spatial point, which can evaluate the danger from the flow in accordance with criteria preselected by the user,
- a block (22) for determining the amount of spatial points in which the vortex-inducing, aerodynamic additional forces and moments pose a danger, and which can determine the coordinates of the spatial points located in the endangered zone in accordance with a selection of endangerment criteria preselected by the user, and
- a block (23) for determining the geometric characteristics of the trailing vortex danger zone which can compute these characteristics from the coordinates of the points located in the danger zone.

24. The system in accordance with one of claims 13 to 23,
**characterized in that**
the permissible heeling angle of the aircraft is selected as a part of the danger criteria.

25. The system in accordance with one of claims 13 to 24,
**characterized in that**
the permissible, vortex-inducing heeling angle of the aircraft is selected as a part of the danger criteria.

26. The system in accordance with one of claims 13 to 25,
**characterized in that**
the block (23) for determining the geometric characteristics of the trailing vortex danger zone can match the endangerment threshold.

27. The system in accordance with one of claims 13 to 26,
**characterized in that**
the trailing vortex monitoring arrangement (5) and the prognostic arrangement (9) contain a programmable component, and the arrangement (10) for determining the parameters of the trailing vortex danger zone is contained in the software of this programmable component.

28. The system in accordance with one of claims 13 to 27,
**characterized in that** the arrangement (10) for determining the parameters of the trailing vortex danger zone contains a data bank with the characteristics of the trailing vortex danger zones of different vortex generators.

29. The system in accordance with one of claims 13 to 28,
**characterized in that**
it comprises an arrangement for storing and/or transmitting of data regarding the lead time, coordinates of the control area, the area of the forecast aircraft positions and of the trailing vortex danger zones located in the vicinity of the aircraft in the course of at least the alarm indication of the zero distance of the area of the forecast aircraft positions in regard to the trailing vortex danger zone.

## Revendications

1. Procédé pour empêcher l'entrée éventuelle dans une zone dangereuse de remous tourbillonnaire, dans lequel
- on transmet des informations à l'instant courant, dans le système de coordonnées inertiel, sur la configuration, la position et l'orientation de l'aéronef,
- on transmet dans le système de coordonnées inertiel à l'instant courant des informations sur la position, la caractéristique géométrique et la caractéristique de masse ainsi que les paramètres de déplacement du générateur de tourbillon,
- on mémorise dans le système de coordonnées inertiel des informations sur la position et les paramètres de déplacement du générateur de tourbillon,
- on transmet à l'instant courant des informations sur les paramètres ambiants dans la région commune de l'aéronef et du générateur de tourbillon,
- on détermine à l'instant courant, dans le système de coordonnées inertiel, le chemin et l'intensité du remous tourbillonnaire en tant qu'ensemble des chemins des points médians des régions tourbillonnaires,
- on mémorise dans le système de coordonnées inertiel des informations sur les coordonnées des points de chemin et sur l'intensité du remous tourbillonnaire en tant qu'ensemble de chemin des points médians des régions tourbillonnaires,
- on choisit le temps d'action, pendant lequel au moins une manoeuvre de modification du chemin de l'aéronef est possible manoeuvre qui assure que l'aéronef, après qu'il a été averti qu'il entre éventuellement dans une zone dangereuse de remous tourbillonnaire, s'en écarte,
- on calcule la distance d'action, qui est égale à la distance parcourue pendant le temps d'action, on simule une surface de contrôle, qui se trouve dans l'espace devant l'aéronef perpendiculairement à sa direction de déplacement à la distance d'action et on détermine dans le système de coordonnées inertiel l'instant pronostiqué où l'aéronef coupe la surface de contrôle,
- on détermine à l'instant pronostiqué la caractéristique géométrique de la zone dangereuse de remous tourbillonnaire en tant qu'ensemble des zones dangereuses des régions tourbillonnaires,
- on détermine à l'instant pronostiqué, dans le système de coordonnées inertiel, le chemin et l'intensité du remous tourbillonnaire en tant qu'ensemble des chemins des points médians des régions tourbillonnaires,
- on calcule les coordonnées des points d'intersection du chemin de remous tourbillonnaire avec la surface de contrôle à l'instant pronostiqué de l'intersection,
- on établit la zone dangereuse de remous tourbillonnaire autour du point d'intersection du chemin de remous tourbillonnaire avec la surface de contrôle en tant qu'ensemble des zones dangereuses de régions tourbillonnaires, intersection pour laquelle les paramètres de déplacement de l'aéronef peuvent dépasser les limites admissibles, la région des positions pronostiquées de l'aéronef en utilisant des normes fixées de conduite de vol dans le temps pronostiqué de l'intersection de la surface de contrôle et les régions de centre de gravité autour de la région des positions pronostiquées, ainsi que l'on transmet à l'utilisateur des informations sur son intersection avec la zone dangereuse de remous tourbillonnaires,
- on détermine dans le système de coordonnées couplé à l'aéronef les coordonnées des points de la région des positions pronostiquées de l'aéronef, les coordonnées des points de la région de centre de gravité et les points de la zone dangereuse de remous tourbillonnaire,
- on calcule la distance de la région du centre de gravité à la zone dangereuse de remous tourbillonnaire,
- on calcule la distance de la région des positions pronostiquées de l'aéronef à la zone dangereuse de remous tourbillonnaire,
- on indique à l'utilisateur la distance nulle de la région de centre de gravité à la zone dangereuse de remous tourbillonnaire du générateur de tourbillon mentionné et on indique comme alerte à l'utilisateur la distance nulle de la région de centre de gravité du générateur de tourbillon mentionné.

2. Procédé suivant la revendication 1,
**caractérisé en ce que**
- on utilise comme informations sur la position, la caractéristique géométrique et la caractéristique de masse, ainsi que sur les paramètres de déplacement du générateur de tourbillon de préférence des informations sur le type de générateur de tourbillon, sa vitesse de déplacement et sa vitesse angulaire, ainsi que les coordonnées des points du chemin du générateur de tourbillon,
- on mémorise dans le système de coordonnées inertiel des informations sur les coordonnées des points de chemin, sur la vitesse de déplacement et sur la vitesse angulaire du générateur de tourbillon,
- on utilise comme informations sur les paramètres ambiants, de préférence, des informations sur les grandeurs et la vitesse locale du vent, le profil du vent suivant l'altitude, la turbulence et le type de la surface de couverture,
- on détermine le chemin et l'intensité du remous tourbillonnaire à l'instant courant en tant qu'ensemble de chemins des points médians de domaines tourbillonnaires à partir de données mémorisées sur le type de générateur de tourbillon, les coordonnées des points de chemin, la vitesse de déplacement et la vitesse angulaire,
- on simule à l'instant courant, dans le système de coordonnées inertiel, la surface de contrôle à partir de données sur la position, l'orientation, la vitesse de déplacement de l'aéronef et sur le temps d'action choisie,
- on détermine la caractéristique géométrique de la zone dangereuse de remous tourbillonnaire en tant qu'ensemble des zones dangereuses des domaines tourbillonnaires à partir de données mémorisées sur les coordonnées des points de chemin et sur l'intensité du remous tourbillonnaire en tant qu'ensemble de chemins des points médians de régions tourbillonnaires dans le système de coordonnées inertiel et à partir de données sur la position, la vitesse de déplacement et la vitesse angulaire de l'aéronef dans le système de coordonnées inertiel,
- on détermine dans le système de coordonnée inertielle le chemin et l'intensité du remous tourbillonnaire à l'instant pronostiqué à partir de données sur le chemin et l'intensité de remous tourbillonnaire en tant qu'ensemble de chemins des points médians de domaines tourbillonnaires,
- on détermine dans le système de coordonnées inertiel les coordonnées des points d'intersection du chemin du remous tourbillonnaire avec la surface de contrôle à l'instant pronostiqué à partir de données sur les coordonnées de la surface de contrôle dans le système de coordonnées inertiel et sur le chemin du remous tourbillonnaire à l'instant pronostiqué dans le système de coordonnées inertiel,
- on établit la zone dangereuse de remous tourbillonnaire dans la surface de contrôle, la région des positions pronostiquées de l'aéronef et la région de centre de gravité à partir de données sur les coordonnées des points d'intersection du remous tourbillonnaire avec la surface de contrôle à l'instant pronostiqué et à partir de données sur la caractéristique géométrique de la zone dangereuse de remous tourbillonnaire en tant qu'ensemble des zones dangereuses des régions tourbillonnaires, ainsi qu'à partir de données sur la position, l'orientation, la vitesse de déplacement et la vitesse angulaire de l'aéronef, en tenant compte de normes réglées de la conduite de vol et
- on détermine les coordonnées de la région des positions pronostiquées de l'aéronef, les coordonnées de la région de centre de gravité et les coordonnées de la zone dangereuse de remous tourbillonnaire dans le système de coordonnées couplé à l'aéronef à partir de données sur les coordonnées de la région de centre de gravité, de la région des positions pronostiquées de l'aéronef, en utilisant des normes réglées pour la conduite de vol et sur la zone dangereuse de remous tourbillonnaire à l'instant pronostiqué, ainsi qu'à partir de données sur les coordonnées et la position de l'aéronef, de préférence sur l'angle de tangage, l'angle du vent et l'angle de roulis de l'aéronef à l'instant courant dans le système de coordonnées inertiel.

3. Procédé suivant la revendication 1 ou 2,
**caractérisé en ce que** l'on effectue en même temps les stades du procédé en relation avec chaque générateur de tourbillon se trouvant dans l'environnement de l'aéronef.

4. Procédé suivant l'une des revendications 1 à 3,
**caractérisé en ce que** l'on corrige en continu le temps d'action.

5. Procédé suivant l'une des revendications 1 à 4,
**caractérisé en ce que** l'on corrige en continu les coordonnées de la région des positions pronostiquées de l'aéronef.

6. Procédé suivant l'une des revendications 1 à 5,
**caractérisé en ce que** l'on corrige en continu les coordonnées de la région de centre de gravité.

7. Procédé suivant l'une des revendications 1 à 6,
**caractérisé en ce que** l'on effectue à la main la correction en continu.

8. Procédé suivant l'une des revendications 1 à 7,
**caractérisé en ce que** l'on effectue la correction en continu d'une manière semi automatique ou entièrement automatique.

9. Procédé suivant l'une des revendications 1 à 8,
**caractérisé en ce que** l'on met à la disposition de l'utilisateur des informations sur les coordonnées de la surface de contrôle, de la région de centre de gravité, de la région des positions pronostiquées de l'aéronef et des zones dangereuses de tourbillons se trouvant dans l'environnement de l'aéronef.

10. Procédé suivant l'une des revendications 1 à 9,
**caractérisé en ce que** l'on visualise des informations sur la présence de la région des positions pronostiquées, de la région de centre de gravité et des zones dangereuses de tourbillons dans la surface de contrôle.

11. Procédé suivant l'une des revendications 1 à 10,
**caractérisé en ce que** l'on effectue, au moyen d'un affichage, un affichage de la distance nulle de la région de centre de gravité à la zone dangereuse de tourbillon dans la surface de contrôle et/ou une indication d'alerte de la distance nulle de la région des positions pronostiquées de l'aéronef à la zone dangereuse de tourbillon au moyen d'un affichage qui est choisi dans le groupe qui comporte un affichage visuel, un affichage audio et un affichage par touche.

12. Procédé suivant l'une des revendications 1 à 11,
**caractérisé en ce que** l'on mémorise les données sur le temps d'action, les coordonnées de la surface de contrôle, de la région des positions pronostiquées de l'aéronef et des zones dangereuses de tourbillon au cours de l'indication d'alerte de la distance nulle de la région des positions pronostiquées de l'aéronef à la zone dangereuse de remous tourbillonnaire.

13. Système pour avertir d'une entrée éventuelle dans une zone dangereuse de remous tourbillonnaire, qui comprend ce qui suit :
- un dispositif (1) de contrôle des paramètres de l'aéronef, qui peut recevoir des informations dans l'instant courant, dans le système de coordonnées inertiel, sur la configuration, la position et l'orientation d'un aéronef,
- un dispositif (2) de contrôle du générateur de tourbillon, qui peut recevoir des informations sur la position, la caractéristique géométrique, et la caractéristique de masse du générateur de tourbillon dans le même système de coordonnées à l'instant courant, ainsi que sur des paramètres de déplacement du générateur de tourbillon.
- un dispositif (3) de mémorisation, qui peut mémoriser des informations, dans le système de coordonnées inertiel, sur la position et des paramètres de déplacement du générateur de tourbillon,
- un détecteur (4) des paramètres ambiants, qui peut recevoir, à l'instant courant, des informations sur les paramètres ambiants dans la région commune de l'aéronef et du générateur de tourbillon,
- un dispositif (5) de contrôle de remous tourbillonnaire qui peut déterminer, dans le système de coordonnées inertiel, le chemin et l'intensité du remous tourbillonnaire en tant qu'ensemble de chemins des points médians des régions de tourbillon,
- un dispositif (6) de mémorisation, qui peut mémoriser, dans le système de coordonnées inertiel, des informations sur les coordonnées des points de chemin et sur l'intensité du remous tourbillonnaire en tant qu'ensemble de chemins des points médians de régions du tourbillon,
- un dispositif (7) de sélection du temps d'action pendant lequel on peut effectuer au moins une manoeuvre de modification du chemin de l'aéronef et qui assure que l'aéronef, après avoir été averti de l'entrée éventuelle dans le remous tourbillonnaire, s'en écarte,
- un dispositif (8) de simulation de la surface de contrôle, qui peut calculer la distance d'action, qui est égale à la distance parcourue par l'aéronef pendant le temps d'action, et une surface de contrôle qui se trouve dans l'espace devant l'aéronef à la distance d'action et perpendiculairement à sa direction de déplacement et qui peut déterminer, dans le système de coordonnées inertiel, l'instant pronostiqué de l'intersection de cette surface,
- un dispositif (10) de détermination des paramètres de la zone dangereuse, qui peut déterminer la caractéristique géométrique de la zone dangereuse de remous tourbillonnaire en tant qu'ensemble des zones dangereuses de régions de tourbillon à l'instant pronostiqué,
- un dispositif (9) de pronostic, qui peut déterminer dans le système de coordonnées inertiel, à l'instant pronostiqué le chemin de remous tourbillonnaire du générateur en tant qu'ensemble de chemins des points médians des régions de tourbillon, ainsi que l'intensité du remous tourbillonnaire,
- un dispositif (11) de calcul des points d'intersection, qui peut calculer les coordonnées des points d'intersection du chemin de remous tourbillonnaire avec la surface de contrôle à l'instant pronostiqué de l'intersection avec la surface de contrôle,
- un dispositif (12) d'établissement de zones et de régions, qui assure à l'utilisateur l'établissement de la zone dangereuse de remous tourbillonnaire autour du point d'intersection de remous tourbillonnaire avec la surface de contrôle en tant qu'ensemble des zones dangereuses de régions de tourbillon, intersection pour laquelle les paramètres de déplacement de l'aéronef peuvent dépasser des limites admissibles, l'établissement de la région de la position pronostiquée de l'aéronef en utilisant des normes fixées de conduite de vol à l'instant pronostiqué de l'intersection de la surface de contrôle, l'établissement d'une région de centre de gravité autour de la région des positions pronostiquées et la transmission de l'information sur son intersection avec la zone dangereuse de remous tourbillonnaire,
- un bloc (13) de transition, qui peut calculer les coordonnées de la région des positions pronostiquées de l'aéronef, de la région de centre de gravité et de la zone dangereuse de remous tourbillonnaire dans le système de coordonnées couplé à l'aéronef,
- un premier bloc (14) de contrôle des conditions d'intersection, qui peut déterminer la distance de la région de centre de gravité à la zone dangereuse de remous tourbillonnaire et fixer la distance nulle,
- un deuxième bloc (15) de contrôle des conditions d'intersection, qui peut déterminer la distance de la région des régions pronostiquées de l'aéronef à la zone dangereuse de remous tourbillonnaire et fixer la distance nulle,
- un dispositif (16) d'indication, qui assure une indication de la distance nulle de la région centre de gravité à la zone dangereuse de remous tourbillonnaires, et
- un dispositif (17) d'alerte, qui assure une indication de la distance nulle de la région pronostiquée des positions de l'aéronef à la zone dangereuse de remous tourbillonnaire.

14. Système suivant la revendication 13,
**caractérisé en ce que,**
- le dispositif (1) de contrôle des paramètres de l'aéronef peut recevoir des informations au moins sur la configuration, les coordonnées, la vitesse de déplacement, l'angle de tangage, l'angle du vent et l'angle de roulis de l'aéronef,
- le dispositif (2) de contrôle du générateur de tourbillon peut recevoir des informations au moins sur le type de générateur de tourbillon, sa vitesse de déplacement et sa vitesse angulaire, ainsi que sur les coordonnées des points du chemin du générateur de tourbillon,
- le détecteur (4) des paramètres ambiant peut recevoir des informations au moins sur l'intensité et la direction de la vitesse locale du vent, le profil du vent suivant l'altitude, l'intensité de turbulence et le type de la surface de couverture,
- le dispositif (5) de contrôle du remous tourbillonnaire peut déterminer le chemin et l'intensité du remous tourbillonnaire, en tant qu'ensemble de chemin des points médians de domaines de tourbillon à partir de données mémorisées sur le type du générateur de remous tourbillonnaire, les coordonnées des points de chemin du générateur de tourbillon et la vitesse de déplacement et la vitesse angulaire,
- le dispositif (8) de simulation peut simuler la surface de contrôle à partir de données sur la position, l'orientation, la vitesse de déplacement de l'aéronef et le temps d'action,
- le dispositif (10) de détermination des paramètres de la zone dangereuse peut déterminer, dans le système de coordonnées inertiel, la caractéristique géométrique de la zone dangereuse de remous tourbillonnaire du générateur de tourbillon à partir de données mémorisées sur les coordonnées des points de chemin du remous tourbillonnaire, la configuration, la position, la vitesse de déplacement et la vitesse angulaire de l'aéronef,
- le dispositif (9) de pronostic peut déterminer, dans le système de coordonnées inertiel, le chemin du remous tourbillonnaire produit et son intensité à partir de données sur le chemin du remous tourbillonnaire et son intensité en tant qu'ensemble de chemin des points médians de régions du tourbillon,
- le dispositif (11) de calcul des points d'intersection peut calculer à l'instant pronostiqué, dans le système de coordonnées inertiel, les coordonnées des points d'intersection du chemin du remous tourbillonnaire avec la surface de contrôle à partir de données sur les coordonnées de la surface de contrôle, du chemin du remous tourbillonnaire,
- le dispositif (12) d'établissement de zones et de régions peut établir, dans le système de coordonnées inertiel, les zones dangereuses de remous tourbillonnaire, les régions des positions pronostiquées de l'aéronef et la région de centre de gravité à partir des données sur les points de coordonnées de l'intersection du remous tourbillonnaire à l'instant pronostiqué, de données sur la caractéristique géométrique de la zone dangereuse en tant qu'ensemble des zones dangereuses des régions de tourbillon et de données sur la configuration, la position, l'orientation, la vitesse de déplacement et la vitesse angulaire de l'aéronef en utilisant des normes fixées pour la conduite de vol, et
- le bloc (13) de transition peut calculer les coordonnées de la région des positions pronostiquées de l'aéronef, la région de centre de gravité et la zone dangereuse de remous tourbillonnaire, dans le système de coordonnées couplé à l'aéronef, à partir de données sur les coordonnées de la région de centre de gravité et de la zone dangereuse de remous tourbillonnaire à l'instant pronostiqué dans le système de coordonnées inertiel et à partir de données sur la configuration, des coordonnées de l'aéronef et de sa position ainsi que, de préférence, sur l'angle de roulis, l'angle du vent et l'angle de tangage à l'instant courant dans le système de coordonnées inertiel.

15. Système suivant la revendication 13 ou 14,
**caractérisé en ce qu'**il comprend un dispositif (2) de contrôle du générateur de tourbillon, un dispositif (3, 6) de mémorisation, un dispositif (5) de contrôle du remous tourbillonnaire, un dispositif (10) de détermination des paramètres de la zone dangereuse, un dispositif (9) de pronostic, un dispositif (10) de calcul des points d'intersection, un dispositif (12) d'établissement de zones et de régions, deux blocs (13, 14) de contrôle de la condition d'intersection, ainsi qu'un dispositif d'indication et un dispositif d'indication d'alerte, ces dispositifs assurant un mode de travail simultané en relation à chaque générateur de tourbillon se trouvant individuellement dans l'environnement de l'aéronef.

16. Système suivant l'une des revendications 13 à 15,
**caractérisé en ce que** le dispositif (7) de sélection du temps d'action est réalisé en ayant la possibilité d'une correction en continu du temps d'action.

17. Système suivant l'une des revendications 13 à 16,
**caractérisé en ce que** le dispositif (12) d'établissement de zone et de région est réalisé en ayant la possibilité d'une correction en continu des coordonnées de la région des positions pronostiquées de l'aéronef.

18. Système suivant l'une des revendications 13 à 17,
**caractérisé en ce que** le dispositif (12) d'établissement de zones et de régionqs est réalisé en ayant la possibilité d'une correction en continu des coordonnées de la région de centre de gravité.

19. Système suivant l'une des revendications 13 à 18,
**caractérisé en ce que** la correction est effectuée manuellement.

20. Système suivant l'une des revendications 13 à 18,
**caractérisé en ce que** la correction est effectuée semi-automatiquement ou entièrement automatiquement.

21. Système suivant l'une des revendications 13 à 20,
**caractérisé en ce qu'**il comporte un dispositif (18) de visualisation de données sur la présence de la région des positions pronostiquées de l'aéronef et des zones dangereuses de remous tourbillonnaires dans la surface de contrôle.

22. Système suivant l'une des revendications 13 à 21,
**caractérisé en ce que** le dispositif (16) d'indication et le dispositif (17) d'indication d'alerte sont choisis dans le groupe qui comporte les indicateurs visuels, les indicateurs audio et les indicateurs par touche.

23. Système suivant l'une des revendications 13 à 22,
**caractérisé en ce qu'**il est prévu, comme dispositif (10) de détermination des paramètres de la zone dangereuse tourbillonnaire, un dispositif qui a les caractéristiques suivantes :
- un bloc (19) de schématisation de l'aéronef, qui peut calculer l'ensemble des caractéristiques géométriques de l'aéronef qui sont nécessaires pour le calcul des forces et des couples supplémentaires induits par le tourbillon qui agit sur l'aéronef,
- un bloc (20) de détermination des forces et couples supplémentaires induits par le tourbillon agissant sur l'aéronef dans le point de l'espace prescrit, bloc qui peut calculer cela à partir des coordonnées mémorisées des points de chemin de points médians du tourbillon et de l'intensité de tourbillon en tant qu'ensemble de chemins des points médians de régions du tourbillon, dans le système de coordonnées inertiel, et à partir de la configuration, de la position, de la vitesse de déplacement et de la vitesse angulaire de l'aéronef dans le système de coordonnées inertiel, ainsi qu'à partir de la caractéristique géométrique de l'aéronef,
- un bloc (21) de détermination du potentiel de danger du courant dans le point de l'espace prescrit, qui peut évaluer le danger du courant suivant un critère prescrit par les utilisateurs,
- un bloc (22) de détermination du nombre des points de l'espace, dans lesquels des forces et couples supplémentaires aérodynamiques induits par le tourbillon sont dangereux, qui peut déterminer les coordonnées des points de l'espace se trouvant dans la zone dangereuse en choisissant suivant un critère de danger prescrit par l'utilisateur, et
- un bloc (23) de détermination de la caractéristique géométrique de la zone dangereuse de remous tourbillonnaire, qui peut calculer cette caractéristique à partir des coordonnées des points se trouvant dans zone dangereuse.

24. Système suivant l'une des revendications 13 à 23,
**caractérisé en ce qu'**il est choisi comme critère de danger l'angle de roulis admissible de l'aéronef.

25. Système suivant l'une des revendications 13 à 24,
**caractérisé en ce qu'**il est choisi comme critère de danger le couple de roulis admissible induit par le tourbillon.

26. Système suivant l'une des revendications 13 à 25,
**caractérisé en ce que** le bloc (23) de détermination de la caractéristique géométrique de la zone dangereuse de remous tourbillonnaire peut adapter le seuil de danger.

27. Système suivant l'une des revendications 13 à 26,
**caractérisé en ce que** le dispositif (5) de contrôle de remous tourbillonnaire et le dispositif (9) de pronostic comporte un composant programmable et le dispositif (10) de détermination des paramètres de la zone dangereuse de remous tourbillonnaire est réalisé dans le logiciel de ce composant programmable.

28. Système suivant l'une des revendications 13 à 27,
**caractérisé en ce que** le dispositif (10) de détermination des paramètres de la zone dangereuse de remous tourbillonnaires comporte une base de données ayant la caractéristique des zones dangereuses de remous tourbillonnaire de différents générateurs de tourbillon.

29. Système suivant l'une des revendications 13 à 28,
**caractérisé en ce qu'**il comprend un dispositif de mémorisation et/ou de transmission de données sur le temps d'action, les coordonnées de la surface de contrôle, la région des positions pronostiquées de l'aéronef et les zones dangereuses de remous tourbillonnaire se trouvant dans l'environnement de l'aéronef au cours au moins de l'indication d'alerte de la distance nulle de la région des positions pronostiquées de l'aéronef à la zone dangereuse de remous tourbillonnaire.
